# EUROPEAN PATENT APPLICATION

(11) **EP 3 000 845 A1**
(43) Date of publication of application: **30.03.2016**
(21) Application number: 14801383.2
(22) Date of filing: 22.05.2014
(51) Int. Cl.: C08L 51/00, C08F 285/00, C08L 53/02, C08L 101/00

(54) **THERMOPLASTIC RESIN COMPOSITION AND MOLDED ARTICLE OF SAME**

(30) Priority: 23.05.2013 JP 2013109113; 25.12.2013 JP 2013267161
(71) Applicant: Asahi Kasei Chemicals Corporation, Tokyo 101-8101 (JP)
(72) Inventor: KURODA, Kunitaka, Tokyo 101-8101 (JP); UEDA, Yoshikazu, Tokyo 1018101 (JP)
(74) Representative: D Young & Co LLP
(86) International application number: PCT/JP2014/063622
(87) International publication number: WO 2014/189121

(57) **Abstract**

A thermoplastic resin composition containing a graft copolymer (A) and a thermoplastic resin (B), in which the thermoplastic resin (B) contains a polymer having a vinyl cyanide monomer unit, the graft copolymer (A) and the thermoplastic resin (B) are contained in predetermined proportions based on the total amount of the graft copolymer (A) and the thermoplastic resin (B), the graft copolymer (A) has a main-chain polymer formed of a rubbery polymer and a graft chain, the graft chain has a vinyl cyanide monomer unit and at least one monomer unit copolymerizable with the vinyl cyanide monomer, the distribution of the content of the vinyl cyanide monomer unit in components derived from a graft chain has peak 1 having a peak top within a content range from 0 mass% or more to less than 10 mass%, and peak 2 having a peak top within a content range from 10 mass% or more to less than 55 mass%, and the difference between a representative value of the content represented by peak 1 and a representative value of the content represented by peak 2 is 10 mass% or more.

## Description

### Technical Field

The present invention relates to a thermoplastic resin composition and a molded article thereof.

### Background Art

Thermoplastic resins having impact resistance have been widely used in home electronics, game machines and automobile interior materials and others. In order to improve appearance of resin articles and prevent resin articles from being scratched, the articles are sometimes completely or partially painted. However, these paint treatments have problems: yield of production tends to be reduced by defective paint and painting is unfavorable from an environmental point of view in consideration of recent tendency of emission limitation of VOC. Thus, the resins to be employed in the aforementioned articles are desired to have not only performance such as impact resistance but also excellent appearance and abrasion resistance, even if a paint treatment is not applied.

As a method for solving the problems, obtaining high sharp appearance and scratch resistance by limiting the linear expansion coefficient of a rubber component to fall within a predetermined range is known (see, for example, Patent Document 1). In contrast, an idea of obtaining high chromogenic property and scratch resistance by limiting the graft rate of a graft copolymer to fall within a predetermined range has been proposed (see, for example, Patent Document 2).

### Citation List

### Patent Document

Patent Document 1: International Publication No. WO 2012/043790
Patent Document 2: Japanese Patent Application Laid-Open No. 2013-18950

### Summary of Invention

### Technical Problem

However, in recent years, a resin article having further higher appearance, in particular, transparency, has been demanded and a resin article having excellent impact resistance and abrasion resistance in addition to higher appearance has been demanded. The present invention was made in consideration of such circumstances and is directed to providing a molded article excellent in impact resistance, transparency and abrasion resistance, and a thermoplastic resin composition that can provide such a molded article.

### Solution to Problem

More specifically, the present invention is as follows.
[1] A thermoplastic resin composition comprising a graft copolymer (A) and a thermoplastic resin (B), wherein the thermoplastic resin (B) contains a polymer having a vinyl cyanide monomer unit, a content of the graft copolymer (A) is 10 to 60 mass% and a content of the thermoplastic resin (B) is 90 to 40 mass% based on a total amount of the graft copolymer (A) and the thermoplastic resin (B), the graft copolymer (A) has a main-chain polymer formed of a rubbery polymer and a graft chain grafted to the main-chain polymer through polymerization, the graft chain has a vinyl cyanide monomer unit and at least one monomer unit copolymerizable with the vinyl cyanide monomer, distribution of the content of the vinyl cyanide monomer unit in components derived from the graft chain in the graft copolymer (A) has two or more peaks, of the two or more peaks, at least one peak is a first peak having a peak top within a content range from 0 mass% or more to less than 10 mass%; and another at least one peak is a second peak having a peak top within a content range from 10 mass% or more to less than 55 mass%, and difference between a representative value of the content represented by the first peak and a representative value of the content represented by the second peak is 10 mass% or more.
[2] The thermoplastic resin composition according to [1], wherein the rubbery polymer in the graft copolymer (A) has a mass average particle size of 0.10 to 0.80 µm.
[3] The thermoplastic resin composition according to [1] or [2], wherein the graft copolymer (A) has a graft rate of 80% or more and less than 240%.
[4] The thermoplastic resin composition according to any one of [1] to [3], wherein a component derived from the first peak in the graft copolymer (A) has a weight average molecular weight of more than 0 and less than 30,000; and a component derived from the second peak has a weight average molecular weight of 30,000 or more and less than 300,000.
[5] The thermoplastic resin composition according to any one of [1] to [4], wherein the rubbery polymer in the graft copolymer (A) has a mass average particle size of 0.10 µm or more and less than 0.35 µm.
[6] A molded article containing the thermoplastic resin composition according to any one of [1] to [5].
[7] The molded article according to [6], wherein the molded article is a case.

### Advantageous Effects of Invention

According to the present invention, it is possible to provide a molded article excellent in impact resistance, transparency and abrasion resistance, and a thermoplastic resin composition that can provide such a molded article.

### Brief Description of Drawing

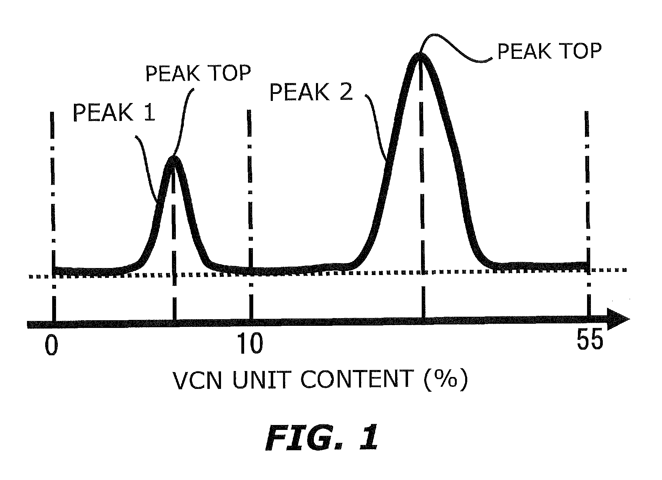

[Figure 1] Figure 1 is a graph schematically showing the distribution of the content of a vinyl cyanide monomer unit in a graft chain-derived component obtained through oxidative decomposition of a graft copolymer.

### Description of Embodiments

Now, an embodiment for carrying out the present invention (hereinafter, simply referred to as "the embodiment") will be more specifically described, if necessary, with reference to the drawing; however, the present invention is not limited to the following embodiment. The present invention can be modified in various ways within the scope of the gist of the invention. In the specification, the term "(meth)acryl" refers to an "acryl" and a "methacryl" corresponding thereto and "(meth)acrylate" refers to an "acrylate" and a "methacrylate" corresponding thereto.

The thermoplastic resin composition of the embodiment contains a graft copolymer (A) and a thermoplastic resin (B). The thermoplastic resin (B) contains a polymer having a vinyl cyanide monomer (b) unit (hereinafter referred to also as "vinyl cyanide polymer"). The graft copolymer (A) has a main-chain polymer formed of a rubbery polymer and a graft chain grafted to the main-chain polymer through polymerization. The graft chain has a vinyl cyanide monomer (a) unit and at least one monomer unit copolymerizable with the vinyl cyanide monomer (a). The distribution of the content of the vinyl cyanide monomer (a) unit in the components derived from the graft chain in the above graft copolymer (A) has two or more peaks. Of the two or more peaks, at least one peak is a first peak having a peak top within the content range from 0 mass% or more to less than 10 mass%; and another at least one peak is a second peak having a peak top within the content range from 10 mass% or more to less than 55 mass%. The difference between the representative value of the above content represented by the first peak and the representative value of the above content represented by the second peak is 10 mass% or more.

In the embodiment, examples of the rubbery polymer in the graft copolymer (A) may include a diene rubber, an acryl rubber and an ethylene rubber. Specific examples thereof may include a polybutadiene, a styrene-butadiene copolymer, a styrene-butadiene block copolymer, an acrylonitrile-butadiene copolymer, a butyl acrylate-butadiene copolymer, a polyisoprene, a butadiene-methyl methacrylate copolymer, a butyl acrylate-methyl methacrylate copolymer, a butadiene-ethyl acrylate copolymer, an ethylene-propylene copolymer, an ethylene-propylene-diene copolymer, an ethylene-isoprene copolymer and an ethylene-methyl acrylate copolymer. These may be used singly or in combinations of two or more. Of them, at least one rubbery polymer selected from the group consisting of polybutadiene, a styrene-butadiene copolymer, a styrene-butadiene block copolymer and acrylonitrile-butadiene copolymer is preferably used in view of impact resistance.

If the rubbery polymer is a copolymer, the compositions (distribution) of individual constitutional units of the rubbery polymer may be homogeneous, different or continuously vary. The compositions of these constitutional units can be checked by a Fourier transform infrared spectrophotometer (FT-IR).

Note that in the graft copolymer (A) of the embodiment, the rubbery polymer constitutes a main-chain polymer.

The rubbery polymer in the graft copolymer (A) is present as a dispersed phase (islands) dispersed in a continuous phase (sea) formed of a thermoplastic resin (B) containing a vinyl cyanide polymer. In other words, the resin (B) and the copolymer (A) constitute a sea-island form. Examples of the shape of dispersed phase of the rubbery polymer dispersed may include, but are not particularly limited to, an indefinite shape, a stick shape, a flat board shape and a particle shape. Of these, a particle shape is preferable in view of impact resistance. The dispersed phases may be each independently present discretely in the continuous phase formed of the thermoplastic resin (B) or some of the dispersed phases may be aggregated and dispersed in aggregation form. In view of impact resistance, it is preferable that the dispersed phases are each individually present discretely.

In the thermoplastic resin composition of the embodiment, the size of the rubbery polymer is as follows. If the rubbery polymer has a particle shape, a mass average particle size thereof is preferably 0.10 µm or more in view of impact resistance and 0.80 µm or less in view of transparency. The mass average particle size is more preferably 0.10 to 0.50 µm, further preferably 0.10 µm or more and less than 0.35 µm, and particularly preferably 0.10 µm or more and less than 0.28 µm. The particle size distribution of the rubbery polymer varies depending upon the desired physical properties and may take a mono-dispersion, poly-dispersion or may be a two-peak distribution.

The mass average particle size of the rubbery polymer can be obtained as follows. First, an ultra-thin slice is prepared from a molded article of the thermoplastic resin composition of the embodiment. The ultra-thin slice is treated with a staining agent such as osmium tetraoxide and ruthenium tetraoxide and thereafter visualized by a transmission electron microscope (TEM). A region (15 µm x 15 µm) of the microscopic image of the ultra-thin slice is analyzed to obtain the mass average particle size. Image can be analyzed by, for example, image analysis software "A-zokun" (manufactured by Asahi Kasei Engineering Corporation).

The content of a rubbery polymer in the graft copolymer (A) is preferably 27 to 72 mass%, more preferably 31 to 56 mass% and further preferably 35 to 46 mass% on the basis of mass of the graft copolymer (A). It is preferable that the content of the rubbery polymer falls within the range from the lower limit value or more to the upper limit value or less, in view of impact resistance, particularly the impact resistance based on DuPont impact test.

The distribution of content of a component derived from a vinyl cyanide monomer (a) in the components derived from a graft chain (hereinafter the "content of a vinyl cyanide monomer (a) unit in a component derived from a graft chain" will be referred to simply as the "VCN unit content") of graft copolymer (A) has two or more peaks. Of the two or more peaks, at least one peak having a peak top in the VCN unit content ranging from 0 mass% or more to less than 10 mass% is referred to as a first peak (hereinafter referred to as "peak 1"); whereas, another at least one peak having a peak top in the VCN unit content ranging from 10 mass% or more to less than 55 mass% is referred to as a second peak (hereinafter referred to as "peak 2"). In view of transparency, the peak top of peak 1 preferably falls within the VCN unit content range of 10 mass% or less, more preferably 5 mass% or less and particularly preferably 3 mass% or less. In contrast, the peak top of peak 2, in view of abrasion resistance and transparency, falls within the VCN unit content range from 10 mass% or more to less than 55 mass%. The peak top of peak 2 preferably falls within the VCN unit content ranging from 15 mass% or more to 50 mass% or less and more preferably ranging from 20 mass% or more to 45 mass% or less.

In view of impact resistance and abrasion resistance, the difference between the representative value of a VCN unit content represented by peak 1 and the representative value of a VCN unit content (C) represented by peak 2, i.e., (|(peak 2) - (peak 1)|), is 10 mass% or more, preferably 15 mass% or more, further preferably 22 mass% or more, and particularly preferably 25 mass% or more. The representative value of a VCN unit content represented by each of peak 1 and peak 2 means a weighted average value obtained from the integration value of the whole peak represented by each of peak 1 and peak 2.

A component derived from a graft chain in a graft copolymer (A) can be obtained through oxidative decomposition of the graft copolymer (A). Figure 1 is a graph schematically showing an example of the distribution of the VCN unit content in a graft chain-derived component obtained through oxidative decomposition of a graft copolymer. Figure 1 shows the case where a single peak 1 and a single peak 2 are present. The horizontal axis represents the VCN unit content; whereas the vertical axis represents the strength of a peak. The peak strength is an index for showing an abundance ratio of a component derived from a graft chain.

Distribution of a VCN unit content can be obtained based on a chromatogram, which is obtained by measuring a component, which is derived from a graft chain and obtained from a thermoplastic resin composition by a predetermined pretreatment described later, by HPLC (high performance liquid chromatography). The distribution of a VCN unit content can be obtained as the total amount (mass basis) of a graft chain having a VCN unit content based on the VCN unit content. The details will be described later. Note that, in the distribution of a VCN unit content, a peak is determined by a detective means for HPLC (for example, an ultraviolet/visible ray detector, trade name "SPD-20A," manufactured by Shimadzu Corporation) based on whether the projection of interest falls within the noise level or not.

When the distribution of a VCN unit content has a plurality of peaks 1 and/or a plurality of peaks 2, the representative value of a VCN unit content represented by peak 1 means a weighted average value obtained from the integration value of the whole peaks 1 and the representative value of a VCN unit content represented by peak 2 means a weighted average value obtained from the integration value of the whole peaks 2. Furthermore, when a plurality of peaks are partially overlapped with each other (including a case where a shoulder peak is present), the overlapped peaks are each regarded as a normal distribution and separately treated. Based on the peaks thus obtained, the above items are determined.

The reduced specific viscosity (ηsp/c) of the component derived from a graft chain preferably ranges from 0.05 to 1.50 dL/g in view of impact resistance. The reduced specific viscosity is more preferably 0.10 to 1.30 dL/g and further preferably 0.15 to 1.10 dL/g. If the reduced specific viscosity is 0.05 dL/g or more, reduction in the impact resistance and strength can be further suppressed. If the reduced specific viscosity is 1.50 dUg or less, further sufficient fluidity can be obtained.

Generally, when at least two monomers are grafted to a rubbery polymer through polymerization, graft polymerization is performed by using the monomers at a constant supply ratio in order to narrow the distribution of the monomer unit contents in a graft chain. In contrast, in the embodiment, if the supply ratio of the monomers to be grafted is changed in a continuous or stepwise fashion, the distribution of the content of each constitutional unit in a component derived from a graft chain in a graft copolymer (A), for example, of a VCN unit content, can be controlled.

More specifically, a method of controlling the distribution of a VCN monomer content by grafting a monomer except a vinyl cyanide monomer to a rubbery polymer through polymerization, and subsequently subjecting at least two monomers including a vinyl cyanide monomer to graft polymerization, may be mentioned and preferably used.

Note that in the distribution of a VCN monomer content, each peak may be either one of a mono-dispersion and poly-dispersion.

The distribution of a VCN unit content in a graft copolymer (A) can be obtained based on a chromatogram, which is obtained by subjecting the graft copolymer (A) to oxidative decomposition, isolating a component derived from a graft chain and measuring the component derived from a graft chain by HPLC. As the method for oxidative decomposition, for example, ozone decomposition and osmic acid decomposition can be used. More specifically, for example, the method described in a collection of papers on polymers (Fumio Ide et al., vol. 32, No. 7, PP. 439-444 (July 1975)) can be used. The branched polymer isolated in this paper corresponds to the component derived from a graft chain in the embodiment.

More specifically, for example, the distribution of a VCN unit content in a graft copolymer (A) can be obtained as follows.

First, the thermoplastic resin composition of the embodiment is dissolved in acetone and centrifuged to separate into an acetone soluble component and an acetone insoluble component. To the acetone insoluble component (for example, 0.5 g), osmium tetraoxide (for example, 0.0046 g), t-butyl alcohol (for example, 10.7 g) and an organic peroxide (for example, "Perbutyl H-69" (trade name, NOF CORPORATION) 9.2 g) are added and refluxed, for e.g., 30 minutes, concentrated by removing the solvent and dissolved in chloroform. The resultant mixture is added to methanol to obtain a precipitate. The precipitate is separated and dried. The precipitate is (for example, 0.03 g) weighed and dissolved in tetrahydrofuran (for example, 10 mL) to prepare a measurement sample.

Separately from the above, a calibration curve showing the relationship between the content of the vinyl cyanide monomer unit and retention time by HPLC, is prepared in advance by nitrogen analysis using a standard sample (polymer) whose content of vinyl cyanide monomer unit is known. The measurement sample prepared above is subjected to HPLC to obtain a chromatogram. Based on the retention time in the chromatogram and the calibration curve, the distribution of a VCN unit content is obtained.

The conditions are as follows.
Measurement apparatus: High performance liquid chromatography (manufactured by Shimadzu Corporation)
Sample concentration: Sample 30 mg/THF 10 mL
Column: treated with silica-based cyanopropyl (trade name "Shim-Pak CLC-CN," manufactured by Shimadzu Corporation)
Development solvent: tetrahydrofuran/n-hexane (2 liquid gradient measurement)
Detector: UV rays (254 nm)

The weight average molecular weight (Mw) of the component derived from peak 1 in a graft copolymer (A) is preferably more than 0 and less than 30,000 in view of transparency, abrasion resistance and fluidity. The weight average molecular weight is more preferably 1,000 to 30,000, further preferably 1,000 to 28,000 and particularly preferably 1,000 to 25,000.

The weight average molecular weight (Mw) of the component derived from peak 2 in a graft copolymer (A) is preferably 30,000 or more and less than 300,000 in view of impact resistance and fluidity. The weight average molecular weight is more preferably 30,000 to 250,000, further preferably 80,000 to 250,000 and particularly preferably 100,000 to 250,000.

The weight average molecular weight of the component derived from peak 1 in a graft copolymer (A) and the weight average molecular weight of the component derived from peak 2 in a graft copolymer (A) can be obtained by fractionating the components corresponding to peak 1 and peak 2 by the aforementioned HPLC and subjecting each of them to GPC (gel permeation chromatography).

The conditions are as follows.
Measuring equipment: Tosoh high-speed GPC apparatus HLC-8220GPC Treatment apparatus: multi-station GPC-8020
Column: TOSOH TSK-GEL (G6000HXL, G5000HXL, G40000HXL, G3000HXL in line), with a guard column
Detector: RI (differential refractive index detector)
Detection sensitivity: 3,000 mV/min
Solvent for use: THF (grade 1: containing a stabilizer)

A weight average molecular weight can be obtained based on a calibration curve method using polystyrene as a standard substance.

In the embodiment, a graft copolymer (A) is a graft copolymer obtained by graft polymerization of a rubbery polymer serving as a main-chain polymer with a monomer mixture containing a vinyl cyanide monomer (a) and at least one monomer copolymerizable with the vinyl cyanide monomer (a). The graft rate in the graft copolymer (A) is preferably 40% or more and less than 260% in view of impact resistance, transparency and abrasion resistance. The graft rate is more preferably 80% or more and less than 250%, further preferably 100% or more and less than 220% and particularly preferably 120% or more and less than 200%.

The graft rate is defined by the proportion of the mass of a graft chain relative to the mass of the main-chain polymer. A method for determining a graft rate is as follows.

The thermoplastic resin composition of the embodiment is dissolved in acetone, centrifuged to separate into an acetone soluble component and an acetone insoluble component. At this time, the acetone insoluble component, which consists of a main-chain polymer formed of a rubbery polymer and a graft chain grafted to the main-chain polymer through polymerization, includes a graft copolymer (A) of the embodiment. The acetone soluble component is a component including a thermoplastic resin (B) containing a vinyl cyanide polymer of the embodiment. The composition ratio of a main-chain polymer and a graft chain can be obtained by analyzing the acetone insoluble component by a Fourier transform infrared spectrophotometer (FT-IR). Based on the analysis results, the graft rate can be obtained.

In the thermoplastic composition of the embodiment, the content of a graft copolymer (A) based on the total amount of a graft copolymer (A) and a thermoplastic resin (B) (100 mass%) is preferably 10 to 60 mass%, more preferably 15 to 55 mass% and further preferably 20 to 50 mass%. More specifically, provided that the total of a graft copolymer (A) and a thermoplastic resin (B) is regarded as 100 mass%, the content of the thermoplastic resin (B) is preferably 90 to 40 mass%, more preferably 85 to 45 mass% and further preferably 80 to 50 mass%. The content of the graft copolymer (A) is preferably 10 mass% or more in view of impact resistance. In contrast, the content of the graft copolymer (A) is 60 mass% or less. This is preferable because the effect of the abrasion resistance of a molded article can be easily exerted. Furthermore, if the compatibility is improved by controlling the composition of constitutional units except the rubbery polymer in the graft copolymer (A) (the types and content of a constitutional unit, the same will be applied below) and the composition of the thermoplastic resin (B) containing a vinyl cyanide polymer, the dispersion state of the rubbery polymer is further improved, with the result that balance of impact resistance, transparency and abrasion resistance of the molded article can be further improved. To improve the compatibility, for example, a method of allowing the types of constitutional units except the rubbery polymer in the graft copolymer (A) to be in conformity with the types of constitutional units of the thermoplastic resin (B) containing a vinyl cyanide polymer or a method of using the individual constitutional units in nearly the same contents and preferably in the same contents may be mentioned.

In the graft copolymer (A), examples of the vinyl cyanide monomer (a) to be grafted to a rubbery polymer through polymerization may include acrylonitrile and methacrylonitrile. At least part of the vinyl cyanide monomer unit may be copolymerized with at least one monomer unit copolymerizable with the vinyl cyanide monomer unit. Examples of the monomer copolymerizable with the vinyl cyanide monomer (a) may include aromatic vinyl monomers such as styrene, α-methylstyrene, o-methylstyrene, p-methylstyrene, ethyl styrene, p-t-butylstyrene and vinylnaphthalene; (meth)acrylates such as methyl (meth)acrylate, ethyl (meth)acrylate and butyl (meth)acrylate; acrylic acids such as (meth)acrylic acid; N-substituted maleimide monomers such as N-phenylmaleimide and N-methylmaleimide; and glycidyl group-containing monomers such as glycidyl (meth)acrylate. These may be used singly or in combinations of two or more. Of these, styrene, α-methylstyrene, methyl acrylate, ethyl acrylate, butyl acrylate, methyl methacrylate, N-phenylmaleimide and glycidyl methacrylate are preferable in view of strength and heat resistance. In view of strength, styrene is particularly preferable. In view of heat resistance, N-phenylmaleimide is particularly preferable.

In the graft copolymer (A), the content (E) of vinyl cyanide monomer (a) unit in the all monomer units (100 mass%) except a rubbery polymer is preferably 5 mass% or more in view of impact resistance and abrasion resistance, and preferably less than 45 mass% in view of transparency. The content (E) is more preferably 10 to 40 mass%, further preferably 15 to 35 mass% and particularly preferably 20 to 30 mass%. Furthermore, the difference between the representative value of a VCN unit content (C) represented by peak 2 and the content (E), i.e., (|(C) - (E)|), is preferably less than 35 mass% in view of impact resistance, particularly impact resistance based on Charpy impact test, more preferably less than 25 mass% and further preferably less than 15 mass%. Note that the lower limit of the difference (|(C) - (E)|) is not particularly limited and may be, for example, not less than 0 mass%.

The thermoplastic resin composition of the embodiment contains a thermoplastic resin (B) containing a polymer having a vinyl cyanide monomer (b) unit, in view of compatibility with a graft copolymer (A). Examples of the vinyl cyanide monomer (b) may include acrylonitrile and methacrylonitrile. The vinyl cyanide monomer (b) unit may be copolymerized with at least one monomer unit copolymerizable with the vinyl cyanide monomer (b) unit. Examples of the monomer copolymerizable with the vinyl cyanide monomer (b) may include aromatic vinyl monomers such as styrene, α-methylstyrene, o-methylstyrene, p-methylstyrene, ethyl styrene, p-t-butylstyrene and vinylnaphthalene; (meth)acrylates such as methyl (meth)acrylate, ethyl (meth)acrylate and butyl (meth)acrylate; acrylic acids such as (meth)acrylic acid; N-substituted maleimide monomers such as N-phenylmaleimide and N-methylmaleimide; and glycidyl group-containing monomers such as glycidyl (meth)acrylate. These may be used singly or in combinations of two or more. Of these, styrene, α-methylstyrene, methyl acrylate, ethyl acrylate, butyl acrylate, methyl methacrylate, N-phenylmaleimide and glycidyl methacrylate are preferable in view of strength and heat resistance. In view of strength, styrene is particularly preferable. In view of heat resistance, N-phenylmaleimide is particularly preferable.

The thermoplastic resin composition of the embodiment may contain a thermoplastic resin other than the vinyl cyanide polymer. The thermoplastic resin may be a resin applicable to injection molding or a resin that can be used for imparting strength, hardness and heat resistance necessary for practical use to an injection-molded article. As such a thermoplastic resin, in view of miscibility with a graft copolymer (A), an amorphous thermoplastic resin is preferable. Furthermore, if the thermoplastic resin has a glass transition temperature (Tg) of 90 to 300°C, an injection-molded article having strength, hardness and heat resistance necessary for practical use can be obtained more efficiently and without fail. Examples of such a thermoplastic resin may include polystyrene, a methacryl resin, a methyl methacrylate-styrene resin, a polycarbonate resin, an aromatic polyether resin and an amorphous polyester. These may be used singly or in combinations of two or more.

In the thermoplastic resin composition of the embodiment, the content (D) of the vinyl cyanide monomer (b) unit in the all monomer units (100 mass%) in a thermoplastic resin (B) is preferably 15 mass% or more in view of impact resistance and abrasion resistance and preferably 55 mass% or less in view of transparency. The content (D) is more preferably 20 to 50 mass%, further preferably 25 to 45 mass% and particularly preferably 30 to 40 mass%.

The difference between the representative value of a VCN unit content (C) represented by peak 2 and the content (D), i.e., (|(C) - (D)|), is preferably less than 30 mass% in view of abrasion resistance, more preferably less than 20 mass% and further preferably less than 10 mass%. If the difference (|(C) - (D)|) falls within the range, a molded article further excellent in abrasion resistance can be obtained.

Note that the content of a rubbery polymer in a graft copolymer (A); the content (E) of vinyl cyanide monomer (a) unit in the all monomer units except the rubbery polymer; and the content (D) of the vinyl cyanide monomer (b) unit in the all monomer units of a thermoplastic resin can be obtained by a Fourier transform infrared spectrophotometer (FT-IR). For example, the content (E) of vinyl cyanide monomer (a) unit in the all monomer units except the rubbery polymer can be obtained by previously obtaining the content (composition ratio) of individual monomer units in all monomer units in the rubbery polymer, and thereafter, obtaining the content (composition ratio) of individual monomer units in all monomer units in a graft copolymer (A) by FT-IR, and taking into account the content of the rubbery polymer in the graft copolymer (A) to the graft chain grafted to the rubbery polymer through polymerization.

In the embodiment, the reduced specific viscosity (ηsp/c) of a thermoplastic resin (B) preferably falls within the range of 0.20 to 1.50 dUg, in view of impact resistance. The reduced specific viscosity is more preferably 0.30 to 0.80 dL/g, further preferably 0.40 to 0.70 dL/g and particularly preferably 0.40 to 0.55 dL/g. If the reduced specific viscosity is 0.20 dL/g or more, reduction in impact resistance and strength can be further suppressed. If the reduced specific viscosity is 1.50 dL/g or less, further sufficient fluidity can be obtained.

The thermoplastic resin composition of the embodiment contains a graft copolymer (A) and a thermoplastic resin (B), which contains a vinyl cyanide polymer and optionally a thermoplastic resin except the vinyl cyanide polymer (hereinafter, the thermoplastic resin will be referred to as an "optional thermoplastic resin"). In addition to these, if necessary, at least one of optional components may be contained or not. Examples of such an optional component may include various types of additives that can be contained in molded articles described later and those usually contained in thermoplastic resin compositions. The content of the optional component to be contained in a thermoplastic resin composition is not particularly limited as long as an object of the present invention can be attained. The content may be e.g., 0.05 to 4.00 mass% or 0.15 to 3.50 mass%.

The thermoplastic resin composition of the embodiment may be obtained in combination of any of the aforementioned items.

As a method for producing a rubbery polymer contained in a graft copolymer (A) is not particularly limited; for example, bulk polymerization, solution polymerization, suspension polymerization, suspension polymerization in bulk and emulsification polymerization can be used. Of these, for the reason that a particle-shape rubber component (dispersed phase) can be obtained and the particle size thereof can be easily controlled, emulsification polymerization, suspension polymerization and suspension polymerization in bulk are preferably used.

In the case where a rubbery polymer is produced by emulsion polymerization, a thermally decomposed initiator generating radicals with heat and a redox initiator can be used. Alternatively, a method may be used in which, for example, to a rubbery polymer, which is separately obtained by emulsion polymerization in advance, a vinyl monomer is further grafted through polymerization. The graft chain to be obtained herein is preferably compatible with a vinyl cyanide polymer, in view of impact resistance. Note that after a particle-shape rubbery polymer is produced, the particle-shape rubbery polymer may be continuously subjected to the graft polymerization as mentioned above in the same reactor or the rubber particles may be once isolated as a latex and then subjected to graft polymerization.

To describe more specifically, for example, a graft polymer can be obtained by subjecting at least one monomer selected from the group consisting of an aromatic vinyl monomer, a vinyl cyanide monomer and an acryl monomer, to radical polymerization with a polybutadiene latex obtained by emulsion polymerization. Examples of the at least one monomer may include styrene and acrylonitrile; styrene and methyl methacrylate; styrene; methyl methacrylate; and acrylonitrile.

Particularly, if the number of types of monomers to be subjected to graft polymerization with a rubbery polymer is two or more, it is preferable that the distribution of the monomer contents in the graft chain in graft copolymer (A) is controlled by varying the supply ratio of the monomers in a continuous or stepwise fashion. The rubbery polymer may be obtained by subjecting individual monomers in a predetermined supply ratio to synthesis or may be synthetically obtained by changing the supply ratio of individual monomers or continuously changing the supply ratio of individual monomers.

Examples of the method for producing a vinyl cyanide polymer may include, but are not particularly limited to, bulk polymerization, solution polymerization, suspension polymerization, suspension polymerization in bulk and emulsification polymerization. When a copolymer consisting of at least two monomers selected from the group consisting of an aromatic vinyl monomer, a vinyl cyanide monomer and an acryl monomer is produced, radical polymerization is preferably employed. A vinyl cyanide polymer may be produced at the same time when a graft copolymer (A) is produced. To be more specific, the monomer units, which are to be subjected to graft polymerization with a rubbery polymer to produce a graft copolymer (A), may be polymerized by themselves to form a vinyl cyanide polymer.

In the embodiment, a method for mixing (kneading) a graft copolymer (A) and a thermoplastic resin (B) is not particularly limited; examples may include melt-kneading method by a kneader such as an open roll, an intensive mixer, an internal mixer, a co-kneader, a continuous kneader with a two-axis rotor and an extruder. As the extruder, either a single screw or twin screw extruder may be used.

As a method for supplying a graft copolymer (A) and a thermoplastic resin (B) to a melt-kneading machine, they may be simultaneously supplied all from the same supply port or separately from different supply ports. For example, using an extruder having two supply ports, melt-kneading may be performed by supplying a graft copolymer (A) from a main supply port provided near the base of a screw and a thermoplastic resin (B) from a sub-supply port provided between the main supply port and the top of the extruder.

When a graft copolymer (A) and a thermoplastic resin (B) are supplied from the same supply port, both can be mixed in advance and then loaded in an extruder hopper for kneading.

A preferable melt-kneading temperature varies depending upon the types of vinyl cyanide polymer and optional thermoplastic resin and is not particularly limited. When an acrylonitrile-styrene resin is melt-kneaded, for example, the melt-kneading temperature is preferably about 180 to 270°C in terms of the setting temperature of a cylinder. If the melt-kneading temperature falls within the range, the rubbery polymer is satisfactorily dispersed and thus the balance of impact resistance, transparency and abrasion resistance of a molded article can be improved.

When an extruder is used, among the temperatures of the cylinder, the temperature of a supply zone is preferably set at 30 to 200°C. The temperature of a kneading zone where melt-kneading is performed is preferably set, when a crystalline resin is used, at the melting point of the crystalline resin + 30 to 100°C; and when an amorphous resin is used, within the range of Tg of the amorphous resin + 60 to 150°C. If the temperature is set in two stages in this manner, a graft copolymer (A) and a thermoplastic resin (B) are more smoothly kneaded, with the result that the surface smoothness of a molded article, particularly injection-molded article, is improved and abrasion resistance is further improved. In addition, if the cylinder temperature falls within the aforementioned range, a further excellent abrasion resistance can be obtained.

The time for melt-kneading is not particularly limited; however, in view of impact resistance, the melt-kneading time is preferably about 0.5 to 5 minutes.

When a resin composition is produced by extrusion and a molded article is produced by an injection molding machine, the volatile content of the resin composition in a stage of supplying to the injection molding machine is preferably 1,500 ppm or less. If the volatile content falls within the range, a further more excellent abrasion resistance can be obtained. In order to control the volatile content to fall within such a range, it is preferable to suction a volatile content at a degree of vacuum of -100 to -800 hPa, for example, from a ventilation hole provided between the center portion of the cylinder of the twin screw extruder to the top of the extruder.

When a resin composition is produced by extrusion, the resin composition extruded can be directly cut into pellets or can be formed into a strand, which is then cut into pellets by a pelletizer. The shape of the pellets is not particularly limited. The pellets may take a general shape such as a column, a prism and a sphere; however, a columnar shape is preferred.

The molded article of the embodiment contains a thermoplastic resin composition as mentioned above and can be obtained by molding a material containing a thermoplastic resin composition. In molding the material containing a thermoplastic resin composition, for example, a method such as injection molding, injection compression molding, extrusion, blow molding, inflation molding, vacuum molding and pressing can be used.

Particularly, examples of the injection molding may include an injection compression molding, gas assist molding with the help of e.g., nitrogen gas and carbon dioxide, and high-speed heat cycle molding using a high-temperature mold. These can be used singly or in combination. Of these, gas assist molding and high-speed heat cycle molding are preferably used singly or in combination.

The "gas assist molding" used herein refers to injection molding using a nitrogen gas or carbon dioxide gas generally known in the art. Examples may include a method as disclosed in e.g., Japanese Patent Publication No. 57-14968, in which a resin composition is injected in a mold cavity, and thereafter pressurized gas is introduced in the molded body; a method as disclosed in e.g., Japanese Patent No. 3819972, in which a resin composition is injected in a mold cavity and a pressurized gas is introduced into the cavity corresponding to one of the surfaces of the molded body; and a method as disclosed in e.g., Japanese Patent No. 3349070, in which a thermoplastic resin composition in which a gas is previously introduced is molded. Of these, the method of introducing a pressurized gas into the cavity of a mold corresponding to one of the surfaces of the molded body, is preferred.

In the embodiment, in order to prevent shrink and warpage, the pressure is maintained. The pressure is preferably maintained with the assistance of a gas. In maintaining the pressure with the assistance of a gas, the temperature of a mold can be kept relatively low compared to maintenance of pressure by a resin (composition). Thus generation of burr can be more suppressed; at the same time, time for maintaining pressure in order to prevent shrink and warpage can be reduced.

A kneaded mixture containing a graft copolymer (A), a thermoplastic resin (B) containing a vinyl cyanide polymer and an optional thermoplastic resin and optional components is pelletized as described above. From the pellets, a molded article can be obtained by use of an injection molding machine. The mold of the molding machine is preferably polished by a file of #4000 or more and more preferably #12000 or more and put in use. In view of abrasion resistance, the arithmetic average surface roughness Ra of the mold is preferably 0.02 µm or less and more preferably 0.01 µm or less.

The method for controlling the arithmetic average surface roughness Ra of a mold to fall within the above range is not particularly limited; for example, a mold is ground by an ultrasonic grinder or manually by using e.g., diamond file, whetstone, ceramic whetstone, ruby whetstone and GC whetstone. The steel to be used in a mold is preferably quenched and tempered steel of 40 HRC or more, and more preferably 50 HRC or more. In place of grinding a mold, a mold plated with chromium may be used or a mold, which is ground as mentioned above, may be plated with chromium and put in use.

In injection molding, molding is preferably performed by setting the temperature of a mold to be near the Vicat softening point of a kneaded mixture containing a graft copolymer (A) and a thermoplastic resin (B) in view of abrasion resistance. More specifically, the temperature of a mold falls within the range of -25 to +20°C of the Vicat softening point in accordance with ISO306 and further preferably, -15 to +5°C of the Vicat softening point. If the temperature of a mold falls within the above range, transferability to the surface of cavity can be further improved to obtain an injection-molded article having more excellent abrasion resistance can be obtained.

Generally, when the temperature of a mold (cavity surface) increases, the time required for cooling increases, with the result that the time of molding cycle is extended. Then, a high-speed heat cycle molding capable of heating and cooling the surface of a cavity in a short time, is preferably used. If this method is employed, improvement of abrasion resistance and productivity can be simultaneously attained. The surface of a molded body is preferably cooled at a rate of 1 to 100°C/second in view of abrasion resistance of the molded body. The cooling rate of a molded body surface is more preferably 30 to 90°C/second and further preferably 40 to 80°C/second.

Furthermore, a molding process of using a mold having a built-in steam piping and heating wire for increasing or decreasing the temperature of the mold and a molding process of using supercritical CO₂ can be preferably used.

The temperature of a resin composition (the above kneaded mixture) during injection molding is preferably a temperature suitable for a kneaded mixture to be molded. For example, if the kneaded mixture contains an ABS resin, a rubber modified polystyrene and/or a methyl methacrylate resin, the temperature is preferably 220 to 260°C. When the kneaded mixture contains a polycarbonate, the temperature is preferably 260 to 300°C.

The injection speed of the injection-molded article of the thermoplastic resin composition of the embodiment is preferably 1 to 50 mm/s and more preferably 5 to 30 mm/s in view of abrasion resistance.

As an example of the molded articles containing the thermoplastic resin composition of the embodiment, a case is mentioned. The case is used as an exterior package (cover) of machines having a mechanical and electrical function etc. and may be attached to these machines. Examples of the machines covered with a case may include household electrical appliances, OA apparatuses, housing and facility equipment and vehicle apparatuses. Specific examples of the household electrical appliances may include a vacuum cleaner, a washing machine, a refrigerator, a microwave oven, a rice cooker, an electric pot, a telephone, a coffee maker, liquid crystal and plasma TV sets, a visual recorder, an audio stereo system, a cell-phone including a smartphone, a stationary game machine, a portable game machine and a wireless remote controller. Specific examples of the OA apparatus may include composite machines such as a facsimile machine and a copying machine, a liquid crystal monitor, a printer and a personal computer. Specific examples of the housing and facility equipment may include a system kitchen, a washstand and a system bus. Specific examples of vehicle apparatuses may include automobile interior articles such as a garnish cover including a shift lever indicator cover, a door handle frame, a power window switch frame, a center cluster, a car stereo, car navigation system frame and a center pillar cover.

The shape and size of a case according to the embodiment are not particularly limited. Examples of the shape may include thin-plate form to three-dimensional form having a certain thickness. A polygonal shape having angular corners and a shape having multi curved surfaces may be acceptable. As the size, a size ranging from a small size within the range of 10 x 10 x 10 mm to larger size within the range of 300 x 100 x 100 mm is included.

A molded article containing the thermoplastic resin composition of the embodiment may contain a slide assisting agent, in addition to a graft copolymer (A) and a thermoplastic resin (B). The slide assisting agent is used for making the surface of a molded article smooth. The amount of slide assisting agent to be added based on the total mass of a graft copolymer (A) and a thermoplastic resin (B) is preferably 0.05 to 2 mass% in view of impact resistance. Owing to the inclusion of the slide assisting agent, further satisfactory results are obtained in a fiber friction test.

Examples of the slide assisting agent may include a lubricant such as an aliphatic metal salt, a polyolefin, a polyester elastomer and a polyamide elastomer.

As the lubricant, lubricants having a fatty acid metal salt and an amido group or an ester group are preferable in view of abrasion resistance. The fatty acid metal salt is preferably a salt formed of a fatty acid and at least one metal selected from sodium, magnesium, calcium, aluminum and zinc. Specific examples of the fatty acid metal salt may include sodium stearate, magnesium stearate, calcium stearate, aluminum stearate (mono, di, tri), zinc stearate, sodium montanate, calcium montanate, calcium ricinoleate and calcium laurate. Of these, sodium stearate, magnesium stearate, calcium stearate and zinc stearate are more preferable. In view of abrasion resistance, a metal salt of stearic acid is preferable, specifically, calcium stearate is more preferable.

Examples of the polyolefin may include polyolefin of at least one monomer selected from the group consisting of ethylene, propylene and α-olefin. The polyolefin may include its raw material and a side product and may be a polymer induced from a polyolefin. Specific examples thereof may include polypropylene, an ethylene-propylene copolymer, a polyethylene (high density, low density, linear low density), an oxidized polyolefin and a graft polymerized polyolefin.

Of the polyolefins, polyolefin wax, oxidized polyolefin wax, a styrene resin grafted polyolefin are preferable in view of abrasion resistance; and polypropylene wax, polyethylene wax, oxidized polypropylene wax, oxidized polyethylene wax, acrylonitrile-styrene copolymer grafted polypropylene, acrylonitrile-styrene copolymer grafted polyethylene, styrene polymer grafted polypropylene and styrene polymer grafted polyethylene are more preferable.

Examples of the polyester elastomer may include polyesters obtained for example, by polycondensation between a dicarboxylic acid compound and a dihydroxy compound, polycondensation of oxycarboxylic acid compounds, ring-opening polycondensation of lactone compounds or polycondensation of a mixture of these components. Either a homo-polyester or a co-polyester may be used.

Examples of the dicarboxylic acid compound may include aromatic dicarboxylic acids including terephthalic acid, isophthalic acid, phthalic acid, naphthalene-2,6-dicarboxylic acid, naphthalene-2,7-dicarboxylic acid, diphenyl-4,4-dicarboxylic acid, diphenoxyethane dicarboxylic acid and sodium 3-sulfoisophthalate; alicyclic dicarboxylic acids such as 1,4-cyclohexane dicarboxylic acid, 1,2-cyclohexane dicarboxylic acid and dicyclohexyl-4,4-dicarboxylic acid; diphenyl ether dicarboxylic acid; diphenyl ethane dicarboxylic acid; aliphatic dicarboxylic acids such as succinic acid, oxalic acid, adipic acid, sebacic acid and dodecane dicarboxylic acid; and mixtures of these dicarboxylic acids. Derivatives of these having an alkyl, alkoxy or halogen substituent may be included. These dicarboxylic acid compounds may be used in the form of an ester-forming derivative such as a lower alcohol ester such as a dimethyl ester. In the embodiment, these dicarboxylic acid compounds may be used singly or in combinations of two or more.

Of these, terephthalic acid, isophthalic acid, 1,4-cyclohexane dicarboxylic acid, sebacic acid, adipic acid and dodecane dicarboxylic acid are preferably used in view of polymerization ability, color tone and impact resistance.

Examples of the dihydroxy compound may include, ethylene glycol, propylene glycol, butane diol, neopentylglycol, butene diol, hydroquinone, resorcin, dihydroxy diphenyl ether, cyclohexanediol, hydroquinone, resorcin, dihydroxy diphenyl ether, cyclohexanediol and 2,2-bis(4-hydroxyphenyl)propane. Polyoxy alkylene glycols of these and derivatives of these having an alkyl, alkoxy or halogen substituent may be included. These dihydroxy compounds can be used singly or in combinations of two or more.

Examples of the oxycarboxylic acid compound may include oxybenzoic acid, oxynaphthoic acid and diphenylene oxycarboxylic acid. Derivatives of these having an alkyl, alkoxy or halogen substituent may be included. These oxycarboxylic acid compounds can be used singly or in combinations of two or more. For producing a polyester elastomer, a lactone compound such as ε-caprolactone can be used.

Examples of the polyamide elastomer may include an aminocarboxylic acid having 6 or more carbon atoms, a lactam or a nylon mn salt where m + n is 12 or more. Examples of a hard segment (X) of a polyamide elastomer may include aminocarboxylic acids such as ω-aminocaproic acid, ω-aminoenanthic acid, ω-aminocaprylic acid, ω-aminopelargonic acid, ω-aminocapric acid, 11-aminoundecanoic acid and 12-aminododecanoic acid; lactams such as caprolactam laurolactam; and nylon salts such as nylon 6,6, nylon 6,10, nylon 6,12, nylon 11,6, nylon 11,10, nylon 12,6, nylon 11,12, nylon 12,10 and nylon 12,12.

Examples of a soft segment (Y) such as a polyol may include polyethylene glycol, poly(1,2- and 1,3-propyleneoxide) glycol, poly(tetramethyleneoxide) glycol, a poly(hexamethyleneoxide) glycol, a block or random copolymer of an ethylene oxide and propylene and a block or random copolymer of an ethylene oxide and tetrahydrofuran. The number average molecular weight of these soft segments (Y) is preferably 2.0 x 10² to 6.0 x 10³ and more preferably 2.5 x 10² to 4.0 x 10³. Note that both terminals of poly(alkyleneoxide) glycol may be aminated or carboxylated.

Of these slide assisting agents, a slide assisting agent containing a metal salt of stearic acid in combination with a wax is preferable in view of abrasion resistance.

When a slide assisting agent is added to a molded article, in order to improve compatibility of them, an acid modified or an epoxy modified resin may be mixed with the molded article. Furthermore, a graft copolymer (A) and a thermoplastic resin (B) containing a vinyl cyanide polymer and an optional thermoplastic resin may be partly modified with an acid and/or an epoxy as long as appearance is not damaged. To describe such a resin more specifically, if the vinyl cyanide polymer and optional thermoplastic resin are a copolymer of monomers selected from an aromatic vinyl monomer, a vinyl cyanide monomer and an acryl monomer, they may be copolymerized with a vinyl monomer having a carboxyl group or a glycidyl group.

Examples of the vinyl monomer having a carboxyl group may include unsaturated compounds containing a free carboxyl group such as acrylic acid, crotonic acid, cinnamic acid, itaconic acid and maleic acid; and unsaturated compounds containing a carboxyl acid anhydride group such as maleic anhydride, itaconic anhydride, chloromaleic anhydride and citraconic anhydride. Of these, acrylic acid, methacrylic acid and maleic anhydride are preferable in view of abrasion resistance.

Examples of the vinyl monomer having a glycidyl group may include glycidyl methacrylate, glycidyl acrylate, allyl glycidyl ether, methyl glycidyl ether and methyl glycidyl methacrylate. Of these, glycidyl methacrylate is preferable in view of abrasion resistance.

The molded article of the embodiment may contain (or may not contain) at least one optional additive as long as an object of the present invention can be attained. Examples of the additive may include UV ray absorbers and antioxidants based on a phosphite, a hindered phenol, benzotriazole, benzophenone, benzoate and cyanoacrylate; lubricant and plasticizers based on a higher fatty acid, an acid ester, an acid amide and a higher alcohol; mold-releasing agents such as montanic acid and a salt thereof, an ester thereof and a half ester thereof, stearyl alcohol, stearamide and ethylene wax; color protections such as phosphite and hypophosphite; nucleating agents; antistatic agents based on an amine, sulfonic acid or a polyether; phosphorus-base flame retardants based on 1,3-phenylene bis(2,6-dimethylphenyl phosphate), tetraphenyl-m-phenylenebisphosphate, phenoxyphosphoryl and phenoxy phosphazene; and halogen-base flame retardants. As the amount of each of them to be added, 0.05 to 1 mass% is preferable in view of weather resistance.

To improve appearance, a molded article may contain, for example, an inorganic pigment, an organic pigment, a metallic pigment, and a dye. Of the colorants, colorants staining a molded article white, black and red are preferably used since the molded article appears to be an extremely high class article.

Examples of the inorganic pigment may include titanium oxide, carbon black, titanium yellow, iron oxide pigment, azure blue, cobalt blue, chromium oxide, spinel green, a lead chromate pigment and a cadmium pigment.

Examples of the organic pigment may include azo pigments such as an azo lake pigment, a benzimidazoron pigment, a diarylide pigment and a condensed azo pigment; phthalocyanine pigments such as phthalocyanine blue and phthalocyanine green; and condensed polycyclic pigments such as an isoindolinone pigment, a quinophthalone pigment, a quinacridone pigment, a perylene pigment, an anthraquinone pigment, a perinone pigment and dioxazine violet.

Examples of the metallic pigment may include a scaly aluminum metallic pigment; a spherical aluminum pigment used for improving appearance of weld, a pearl-like metallic pigment such as mica powder and a pigment prepared by coating polygonal inorganic particles such as glass particles with a metal by plating or sputtering.

Examples of the dye may include a nitroso dye, a nitro dye, an azo dye, a stilbene-azo dye, a keto-imine dye, a triphenylmethane dye, a xanthene dye, an acridine dye, a quinoline dye, a methinelpolymethine dye, a thiazole dye, an indamine/indophenol dye, an azine dye, an oxazine dye, a thiazine dye, a sulfide dye, an aminoketone/oxyketone dye, an anthraquinone dye, an indigoid dye and a phthalocyanine dye.

These colorants may be used singly or in combinations of two or more. The amount of each of these to be added based on the total mass of a graft copolymer (A) and a thermoplastic resin (B) is preferably 0.05 to 2 mass% and more preferably 0.1 to 1.5 mass%, in view of color tone.

The molded article of the embodiment may be obtained in combination of any of the aforementioned items.

According to the embodiment, a molded article excellent in impact resistance, transparency and abrasion resistance can be obtained. For example, a molded article having a Charpy impact strength of preferably 5 kJ/m² or more, more preferably 7 kJ/m² or more, further preferably 8 kJ/m² or more and particularly preferably 9 kJ/m² or more can be obtained. Furthermore, a molded article having a DuPont impact strength of preferably 50 cm·kg or more, more preferably 60 cm·kg or more and further preferably 100 cm·kg or more can be obtained. Furthermore, a molded article having a total light transmittance of preferably 50% or more, more preferably 53% or more and further preferably 56% or more can be obtained. Furthermore, a molded article having a luminosity difference (ΔL*) between luminosity (L*) values before and after wipe in a fiber friction test of preferably less than 2, more preferably less than 1.5, further preferably less than 1.3 and particularly preferably less than 1.0 can be obtained. These values can be measured in accordance with the following Examples.

### Examples

The present invention will be described more specifically by way of Examples, below; however, the present invention is not limited to these Examples. Evaluations in Examples were conducted in accordance with the following methods.

For evaluation of impact resistance, a Charpy notched impact strength (kJ/m²) and DuPont impact strength (cm·kg) were used.

### (1) Charpy notched impact strength (kJ/m²)

A thermoplastic resin composition was molded by an injection molding machine (serial number: EC60N) manufactured by Toshiba Machine Co., Ltd., at a cylinder temperature of 250°C and a mold temperature of 60°C. From the molded article, a test piece having 8 cm in length x 1 cm in width and a thickness of 4 mm was excised out, and subjected to evaluation in accordance with ISO179. If a test piece has a Charpy notched impact strength of 5 kJ/m² or more, the molded particle can be used without any practical problems in home electronics, game machines, automobile interior materials and others. If the Charpy notched impact strength was less than 5 kJ/m², the molded article was regarded as "not acceptable." If the Charpy notched impact strength was 5 kJ/m² or more and less than 7 kJ/m², the molded article was regarded as "acceptable"; if 7 kJ/m² or more and less than 8 kJ/m², as "good"; if 8 kJ/m² or more and less than 9 kJ/m² as "excellent"; and if 9 kJ/m² or more as "most excellent."

### (2) DuPont impact strength (cm·kg)

Using an injection molding machine (serial number: EC60N) manufactured by Toshiba Machine Co., Ltd., a flat plate having 5 cm x 9 cm and a thickness of 2.5 mm was molded from a thermoplastic resin composition at a cylinder temperature of 250°C and a mold temperature of 60°C and subjected to evaluation in accordance with ISO-6272. If a flat plate has a DuPont impact strength of 50 cm·kg or more, the flat plate can be used without any practical problems in home electronics, game machines, automobile interior materials and others. If the DuPont impact strength was less than 50 cm·kg, the flat plate was regarded as "not acceptable"; if 50 cm·kg or more and less than 60 cm·kg, the flat plate was regarded as "acceptable"; if 60 cm·kg or more and less than 100 cm·kg, as "good"; and if 100 cm·kg or more, as "excellent."

### (3) Transparency

Transparency was evaluated based on total light transmittance (%). Using an injection molding machine (serial number: EC60N) manufactured by Toshiba Machine Co., Ltd., a flat plate having 5 cm x 9 cm and a thickness of 2.5 mm was molded from a thermoplastic resin composition at a cylinder temperature of 250°C and a mold temperature of 60°C. The total light transmittance (%) of the obtained flat plate was measured in accordance with ISO13468. If the total light transmittance is set at 50% or more, high quality appearance can be easily obtained. The high quality appearance is brought by deep color tone from which high quality can be strongly sensed. If the total light transmittance was less than 50%, the flat plate was regarded as "not acceptable"; if 50% or more and less than 53%, as "acceptable"; if 53% or more and less than 56%, as "good"; and if 56% or more as "excellent."

### (4) Abrasion resistance

A molded article obtained by molding the thermoplastic resin composition of the present invention realized high quality appearance without paint. From a practical point of view, it is necessary not to lower appearance by an action such as cleansing and wiping for removing stains routinely performed in daily life. Appearance is lowered by wiping a molded article because small scratches are produced in the surface of the molded article. Then, as a measure of evaluating appearance retaining ability, in other words, abrasion resistance, evaluation by a fiber friction test was used.

In the fiber friction test, a surface of a molded article (flat plate described later) was rubbed with tissue paper and degree of scratching was evaluated. More specifically, the degree of scratching was evaluated by a luminosity difference (ΔL*) between luminosity (L*) values before and after wipe. Evaluation was performed in the conditions: a load for wiping of 1,000 g, a stroke of 60 mm, a speed of 50 mm/sec, the number of reciprocal movements of 20, by which cleaning and wiping of a molded article routinely carried out was conceivably reproduced.

In measuring luminosity L*, first, a flat plate having 5 cm x 9 cm and a thickness of 2.5 mm was injection-molded from a kneaded mixture of a thermoplastic resin composition (100 parts by mass) and carbon black (1 part by mass) at a cylinder temperature of 250°C and an injection rate of 50 mm/s, by using an injection molding machine (serial number: EC60N) manufactured by Toshiba Machine Co., Ltd. The mold whose surface was ground in advance by a file of No. 10000 until a surface roughness Ra reached 0.01 µm, was used. The mold temperature was controlled by use of a heat cycle molding apparatus (injection molding support apparatus) manufactured by Kaken Geneqs Co., Ltd. such that the temperature at the time of injection was 120°C and the temperature was reduced to 70°C at a reduction rate of about 10°C/second after completion of injection. The flat plate was allowed to stand still at a temperature of 23°C and a relative humidity of 50% under the air for 24 hours. Thereafter, the luminosity (L*) of the flat plate was measured by a multi-light source spectroscopic colorimeter (serial number: MSC-5N-GV5) manufactured by Suga Test Instruments Co., Ltd. The conditions for luminosity measurement are as follows.
- Spectroscope 5 nm optical reflection
- Light source: C light 2° viewing field
- Measurement (d/8) conditions eliminating regular reflection light
- Viewing field for observation: diameter of 15 mm

Subsequently, the flat plate was immobilized at a predetermined position on a color fastness abrasion (Gakushin) tester (trade name "AB-301 color fastness rubbing (Gakushin) tester" manufactured by Tester Sangyo Co., Ltd.). The flat plate was rubbed with tissue paper by reciprocally moving a stage in the following conditions. After the test, the luminosity (L*) of the flat plate was measured in the same conditions as above and the difference ΔL* before and after the test was obtained. In this test, as the number of scratches in the flat-plate surface increases, the value of luminosity difference (ΔL*) increases, in other words, the thermoplastic resin composition can be evaluated to be inferior in abrasion resistance. In contrast, if the number of scratches in the flat-plate surface is low, the luminosity difference (ΔL*) is small, in other words, the thermoplastic resin composition can be evaluated to be excellent in abrasion resistance. Then, luminosity difference (ΔL*) was used as a measure for evaluating abrasion resistance. The smaller the ΔL* value, the more satisfactory the abrasion resistance. If a ΔL* value is less than 2, the degree of scratching does not produce any practical problem in daily use. A flat plate giving a ΔL* value of 2 or more was regarded as "not acceptable." A flat plate giving a ΔL* value of 1.5 or more and less than 2 was regarded as "acceptable"; 1.3 or more and less than 1.5 as "good"; 1.0 or more and less than 1.3 as "excellent"; and less than 1.0 as "most excellent."
- Tissue paper: Ellemoi (manufactured by Kami Shoji Co., Ltd.), folded 3 times (8-ply tissue paper)
- The sliding direction: parallel to the fiber direction of tissue paper (direction easily tears)
- Load: 1,000 g
- Stroke: 60 mm
- Sliding speed: 50 mm/sec
- Number of reciprocal movements: 20

### (5) Vicat softening point

An ISO dumbbell test piece (thickness: 4 mm) was molded from a thermoplastic resin composition and the Vicat softening point of the test piece was measured in accordance with ISO306.

### (6) Fluidity

Fluidity was evaluated based on a melt volume flow rate (MVR) (cm³/10 minutes). MVR of the pellets obtained in Examples and Comparative Examples described later was measured in accordance with ISO1133 at 220°C and a load of 10 kg.

### (Reference Example 1)

### [Production of rubber latex (L-1)]

Butadiene (18 parts by mass), acrylonitrile (2 parts by mass), deionized water (iron concentration: less than 0.02 ppm) (160 parts by mass), potassium rosinate (0.067 parts by mass), potassium oleate (0.033 parts by mass), tertiary dodecyl mercaptan (0.1 parts by mass), sodium hydroxide (0.03 parts by mass), sodium persulfate (0.075 parts by mass) and sodium bicarbonate (0.10 parts by mass) were placed in a pressure resistant container equipped with a stirrer and evacuated into vacuum. The temperature was increased from room temperature to 65°C and polymerization was initiated. Two hours and a half after the initiation of polymerization, a butadiene monomer (80 parts by mass), tertiary dodecyl mercaptan (0.3 parts by mass), disproportionated potassium rosinate (0.67 parts by mass), potassium oleate (0.33 parts by mass), sodium persulfate (0.1 parts by mass), sodium hydroxide (0.05 parts by mass), sodium bicarbonate (0.15 parts by mass) and deionized water (50 parts by mas) were continuously added over further 5 hours. Thereafter, the temperature of the system was increased to 80°C. Fourteen hours after initiation of polymerization, the reaction system was cooled to terminate the polymerization. In the obtained polymer solution, the content of a solid substance was 41.8 mass% and the mass average particle size of the solid substance determined by a microtrac particle size analyzer (trade name: Nanotrac 150) manufactured by Nikkiso Co., Ltd. was 165 nm.

### (Reference Example 2)

### [Production of rubber latex (L-2)]

Butadiene (95 parts by mass), styrene (5 parts by mass), deionized water (iron concentration: less than 0.02 ppm) (135 parts by mass), potassium oleate (3.0 parts by mass), potassium persulfate (0.3 parts by mass), tertiary dodecyl mercaptan (0.2 parts by mass) and potassium hydroxide (0.18 parts by mass) were placed in a pressure resistant container equipped with a stirrer and evacuated into vacuum. The temperature was increased from room temperature to 70°C and polymerization was initiated. Fifteen hours after initiation of polymerization, the reaction system was cooled to terminate the polymerization. In the obtained polymer solution, the content of a solid substance was 40 mass% and the mass average particle size of the solid substance was 80 nm.

### (Reference Example 3)

### [Production of rubber latex (L-3)]

To the rubber latex (L-2) (100 parts by mass) (solid substance) obtained in Reference Example 2, an emulsifier (0.1 parts by mass) represented by the following formula (1) was added. The mixture was stirred for 5 minutes and acetic acid (0.65 parts by mass) was added thereto. Subsequently, potassium hydroxide (0.65 parts by mass) was added to the mixture to obtain a rubber latex (L-3). In the rubber latex (L-3), the mass average particle size of a rubbery polymer was 360 nm. The rubber latex (L-3) did not produce coagulum and was a high-density coagulated latex having a solid substance of 37 mass%. In the rubber latex (L-3), the mass fraction of a solid substance having a particle size of 600 nm or more was 8 mass%.

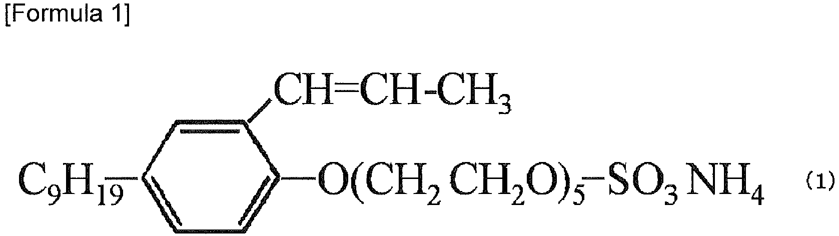

### (Reference Example 4)

### [Production of resin composition (I-1)]

To the rubber latex (L-1) (30 parts by mass) (solid substance) obtained in Reference Example 1, deionized water (iron concentration: less than 0.02 ppm) (95 parts by mass) was added. The gas phase portion was replaced with nitrogen. To the reaction system, an aqueous solution prepared by dissolving sodium formaldehyde sulfoxylate (0.0786 parts by mass), ferrous sulfate (0.0036 parts by mass) and disodium ethylenediamine tetraacetate (0.0408 parts by mass) in deionized water (20 parts by mass) was added ("Initial addition" in Tables 1 and 2). Thereafter, the temperature was increased to 70°C. Subsequently, a monomer mixture solution consisting of styrene (21 parts by mass) and cumene hydroperoxide (0.15 parts by mass) and an aqueous solution prepared by dissolving sodium formaldehyde sulfoxylate (0.0392 parts by mass) in the deionized water (10.5 parts by mass) were added over 1.5 hours ("First stage supplemental addition" in Tables 1 and 2). Subsequently, a monomer mixture solution consisting of acrylonitrile (17.15 parts by mass), styrene (31.85 parts by mass) and cumene hydroperoxide (0.035 parts by mass) and an aqueous solution prepared by dissolving sodium formaldehyde sulfoxylate (0.0914 parts by mass) in the deionized water (24.5 parts by mass) were added over 3.5 hours ("Second stage supplemental addition" in Tables 1 and 2). After completion of addition of them, cumene hydroperoxide (0.02 parts by mass) was further added and then, the temperature of the reaction vessel was controlled to be 70°C for further 1 hour to complete a polymerization reaction. To the resultant reaction mixture, potassium rosinate (0.5 parts by mass) was added ("Shot" in Tables 1 and 2). In this manner, an ABS rubber latex was obtained.

To the ABS rubber latex (100 parts by mass) thus obtained, a defoaming agent (0.07 parts by mass) made of a silicone resin and phenol antioxidant emulsion (0.6 parts by mass) were added and thereafter, the concentration of a solid substance was controlled to be 10 mass% by adding deionized water. After the reaction system was heated to 70°C, an aqueous aluminum sulfate solution was added to cause coagulation. Solid-liquid separation was performed by a screw pressing machine. At this time, the water content was 10 mass%. This was dried to obtain a resin composition (I-1). The resin composition (I-1) consisted of a graft copolymer (I-A-1) and a vinyl cyanide polymer (I-B-1). The content of an acetone insoluble component, i.e., the graft copolymer (I-A-1), was 81.3 mass%; whereas, the content of an acetone soluble component, i.e., vinyl cyanide polymer (I-B-1), was 18.7 mass%. The reduced specific viscosity (ηsp/c) of the vinyl cyanide polymer (I-B-1) was 0.54 dL/g. Note that the reduced specific viscosity was obtained by measuring viscosity of a solution, which was prepared by dissolving a sample (0.25 g) in 2-butanone (50 mL), at 30°C by a Cannon-Fenske capillary tube (hereinafter, the same applies). The reduced specific viscosity of the acetone soluble component (I-B) can be regarded as the same as the reduced specific viscosity of a component derived from a graft chain.

### (Reference Examples 5 to 19)

### [Production of thermoplastic resin compositions (I-2) to (I-16)]

The same procedure as in Reference Example 4 was repeated except that the formulations described in Tables 1 and 2 were employed to produce resin compositions (I-2) to (I-16). The materials and supply ratios of the resin compositions of Reference Examples 4 to 19; the content of the acetone insoluble component and the acetone soluble component and the reduced specific viscosity of the acetone soluble component are shown in Tables 1 and 2. Note that, in "Third stage supplemental addition" of Tables 1 and 2, which is carried out after the second stage supplemental addition and before "shot," individual materials are added in the same manner as in the second stage supplemental addition.

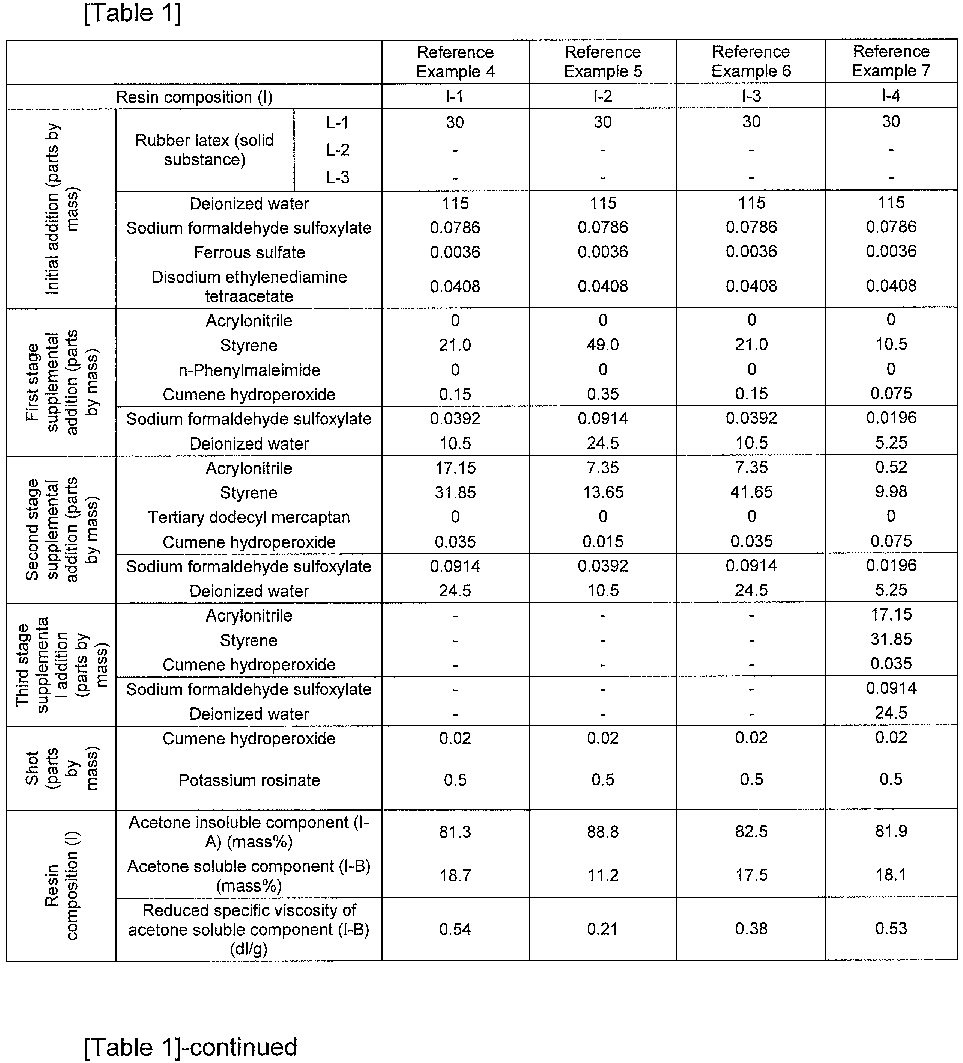

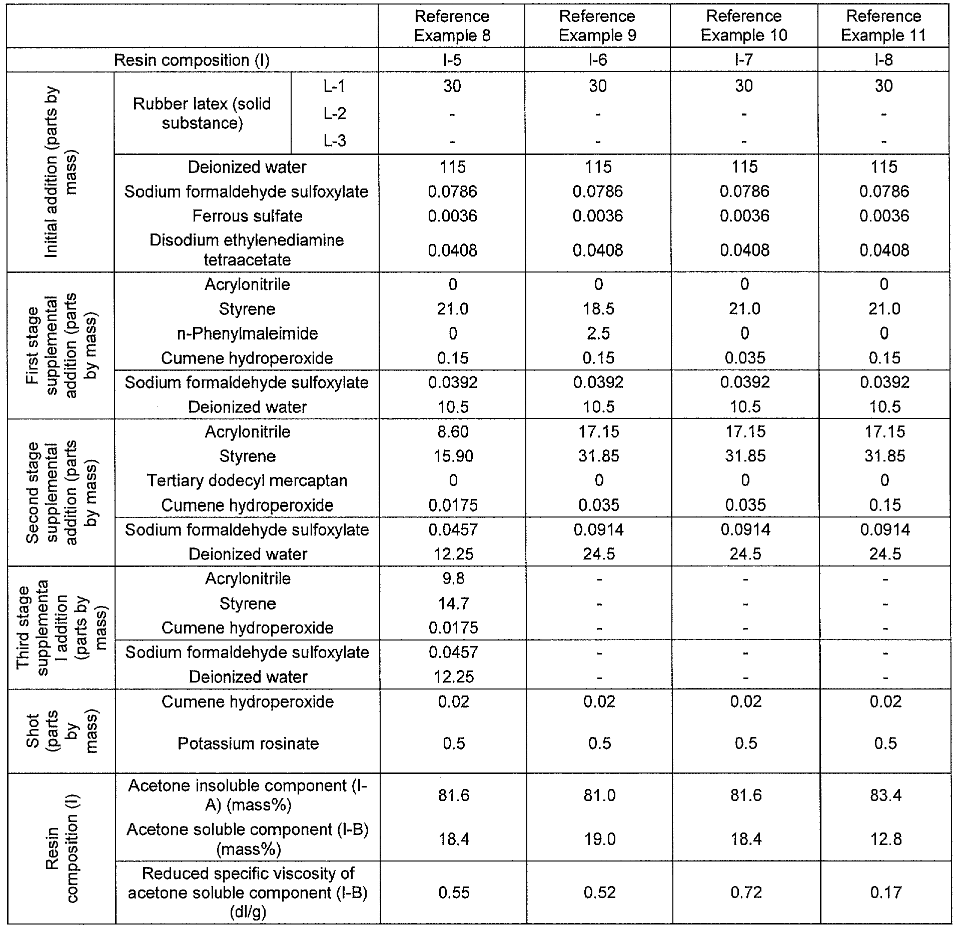

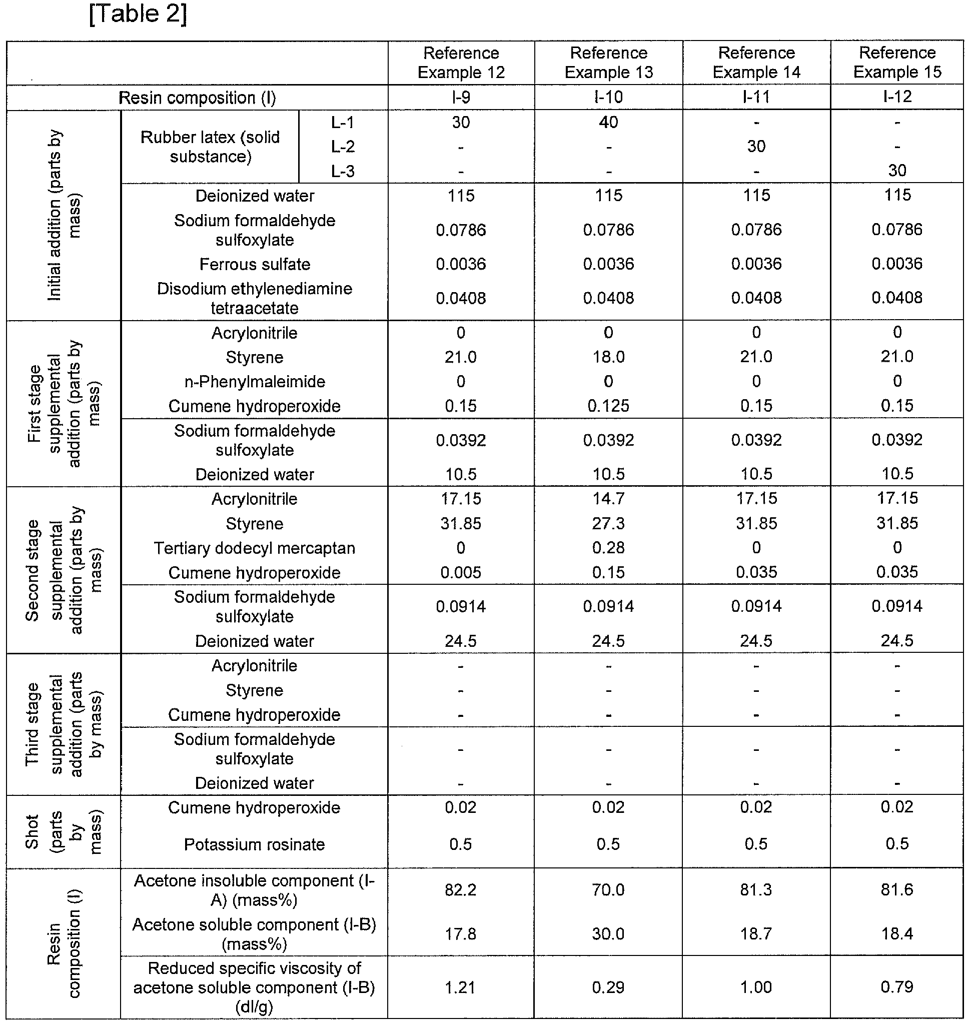

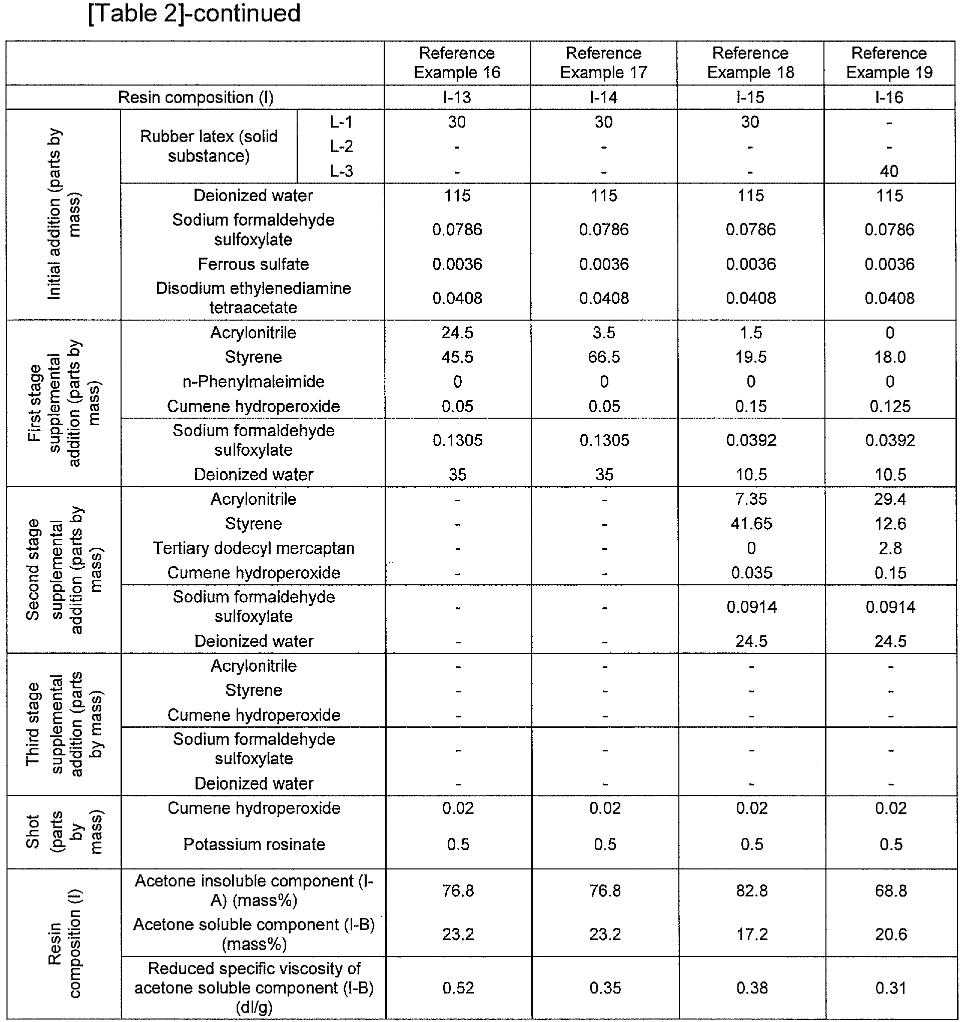

### (Reference Example 20)

### [Production of vinyl cyanide polymer (II-B-1)]

A monomer mixture consisting of acrylonitrile (38.5 parts by mass), styrene (31.0 parts by mass), ethylbenzene (30.5 parts by mass), an α-methylstyrene dimer (0.3 parts by mass) and a peroxide (half-period of 10 hours: 63.5°C) (1.05 parts by mass) having 7 repeat units represented by the following formula (2) was prepared in such a condition that the mixture was not allowed to be in contact with the air and continuously supplied to a reactor equipped with a stirrer. The polymerization temperature was controlled to be 120°C. The mixture was sufficiently mixed by setting the rotation number of the stirrer at 95. The P/V value was 4.0 kw/m³. The average retention time was set at 4.0 hours. The polymer mixture having a polymerization rate of 55% and a polymer concentration of 50 mass% thus obtained was continuously taken out from the reactor and transferred to a first separation vessel. In the first separation vessel, the polymer mixture was heated by a heat exchanger to 160°C and evaporated at a vacuum of 60 Torr to control the polymer concentration in the polymer mixture to be 65 mass%. Thereafter, the polymer mixture was taken out from the first separation vessel and transferred to a second separation vessel. In the second separation vessel, the polymer mixture was heated by a heat exchanger to 260°C and evaporated at a vacuum of 32 Torr to control the content of the volatile component in the polymer mixture to be 0.7 mass% and the polymer concentration thereof to be 99.4 mass%. Thereafter, the polymer mixture was taken out to obtain a vinyl cyanide polymer (II-B-1) as pellets. The composition ratio of individual monomer units in the vinyl cyanide polymer (II-B-1) was analyzed by a Fourier transform infrared spectrophotometer (FT-IR, serial number: FT/IR-7000, manufactured by JASCO Corporation, the same applies hereinafter). As a result, an acrylonitrile unit represented 39.5 mass% and a styrene unit represented 60.5 mass%.

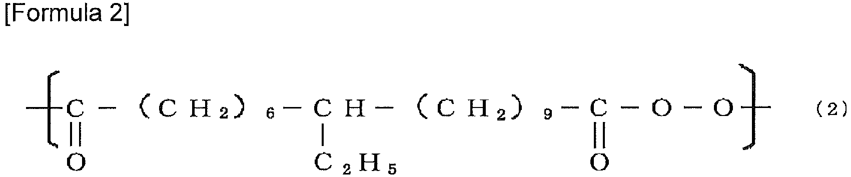

### (Reference Example 21)

### [Production of vinyl cyanide polymer (II-B-2)]

A monomer mixture consisting of acrylonitrile (33.2 parts by mass), styrene (29.9 parts by mass), butyl acrylate (8.1 parts by mass), ethylbenzene (28.8 parts by mass), an α-methylstyrene dimer (0.3 parts by mass) and t-butyl peroxyisopropyl carbonate (0.01 parts by mass), was prepared in such a condition that the mixture was not allowed to be in contact with the air and continuously supplied to a reactor equipped with a stirrer. The polymerization temperature was controlled to be 142°C. The mixture was sufficiently mixed by setting the rotation number of the stirrer at 95. The P/V value was 4.0 kw/m³. The average retention time was set at 1.65 hours. The polymer mixture solution having a polymerization rate of 60% and a polymer concentration of 50 mass% thus obtained was continuously taken out from the reactor and transferred to a first separation vessel. In the first separation vessel, the polymer mixture was heated by a heat exchanger to 160°C and evaporated at a vacuum of 60 Torr to control the polymer concentration in the polymer mixture to be 65 mass%. Thereafter, the polymer mixture was taken out from the first separation vessel and transferred to a second separation vessel. In the second separation vessel, the polymer mixture was heated by a heat exchanger to 260°C and evaporated at a vacuum of 32 Torr to control the content of the volatile component in the polymer mixture to be 0.7 mass% and the polymer concentration thereof to be 99.4 mass%. Thereafter, the polymer mixture was taken out to obtain a vinyl cyanide polymer (II-B-2) as pellets. The composition ratio of individual monomer units in the vinyl cyanide polymer (II-B-2) was analyzed by a Fourier transform infrared spectrophotometer. As a result, an acrylonitrile unit represented 38.6 mass%, a styrene unit represented 51.3 mass% and butyl acrylate represented 10.1 mass%.

### (Reference Example 22)

### [Production of vinyl cyanide polymer (II-B-3)]

A monomer mixture consisting of acrylonitrile (13 parts by mass), styrene (52 parts by mass), toluene (32 parts by mass) serving as a solvent and t-butylperoxy-2-ethyl hexanoate (0.05 parts by mass) serving as a polymerization initiator was bubbled with nitrogen gas and continuously supplied at a rate of 37.5 kg/hour to a reaction vessel of 150 L in inner volume equipped with a two-stage inclined paddle-form (inclination angle: 45°) mixing blade, which was the same as that described in Japanese Patent No. 3664576, Example 2 by use of a spray nozzle. The polymerization temperature was set at 130°C. The same volume of the reaction solution as that of the supplied liquid volume was continuously removed such that the filling rate with the reaction solution in the reaction vessel can be maintained at 70 vol%. To the portion of the reaction vessel corresponding to a liquid phase portion, a jacket was provided for temperature control. The jacket temperature was 128°C. The power required for stirring was 4 kW/m, and the polymerization conversion rate was 39.8 wt%/hour. The reaction solution removed was introduced in a volatile content removal apparatus kept at 250°C and a degree of vacuum as high as 10 mmHg. Unreacted monomers and solvent were collected by deaeration to obtain a vinyl cyanide polymer (II-B-3) as pellets. The composition ratio of the vinyl cyanide polymer (II-B-3) was analyzed by a Fourier transform infrared spectrophotometer. As a result, an acrylonitrile unit represented 20.8 mass% and a styrene unit represented 79.2 mass%.

### (Reference Example 23)

### [Production of thermoplastic resin (II-B-4)]

To a monomer mixture consisting of methyl methacrylate (68.6 parts by mass), methyl acrylate (1.4 parts by mass) and ethylbenzene (30 parts by mass), 1,1-di-t-butylperoxy-3,3,5-trimethyl cyclohexane (150 ppm) and n-octylmercaptan (1,500 ppm) were added and homogeneously mixed. The resultant solution was continuously supplied to an airtight pressure resistant reactor of 10 liters in inner volume. Polymerization was performed while stirring at an average temperature of 135°C and an average retention time of 2 hours. The obtained polymer solution was continuously fed to a storage tank connected to the reactor to separate the polymer, unreacted monomers and the solution. The polymer in a molten state was continuously extruded by an extruder to obtain a thermoplastic resin (II-B-4) as pellets. The composition ratio of the thermoplastic resin (II-B-4) was analyzed by pyrolytic gas chromatography. As a result, the ratio of methyl methacrylate/methyl acrylate was 97.5/2.5 (mass ratio).

Note that vinyl cyanide polymers (II-B-1) to (II-B-3) and the thermoplastic resin (II-B-4) were all soluble in acetone. The composition ratio of monomers and reduced specific viscosity of the vinyl cyanide polymers and thermoplastic resins of Reference Examples 20 to 23 are shown in Table 3.

**[Table 3]**

| | | Reference Example 20 | Reference Example 21 | Reference Example 22 | Reference Example 23 |
|---|---|---|---|---|---|
| Vinyl cyanide polymer or thermoplastic resin (II-B) | | II-B-1 | II-B-2 | II-B-3 | II-B-4 |
| Composition ratio of monomer (mass%) | Acrylonitrile | 39.5 | 38.6 | 20.8 | - |
| | Styrene | 60.5 | 51.3 | 79.2 | - |
| | Butyl acrylate | - | 10.1 | - | - |
| | Methyl methacrylate | | - | - | 97.5 |
| | Methyl acrylate | - | - | - | 2.5 |
| The content of acrylonitrile unit in all monomer units (%) | | 39.5 | 38.6 | 20.8 | - |
| Reduced specific viscosity (dL/g) | | 0.49 | 0.42 | 0.67 | 0.35 |

### (Example 1)

A resin composition (I-1) (45 parts by mass) from which water was removed and sufficiently dried, a vinyl cyanide polymer (II-B-1) (55 parts by mass), ethylene bis-stearamide (1 part by mass), carbon black #2600 (manufactured by Mitsubishi Chemical Corporation, average particle size of 13 nm, nitrogen adsorption specific surface area: 370 m²/g, volatile content: 1.8%) (1.0 part by mass) were mixed. The mixture was loaded in a hopper and kneaded by use of a twin screw extruder (serial number: PCM-30, L/D = 28, manufactured by Ikegai Ironworks Corporation) in the conditions: a predetermined temperature of cylinder of 250°C, a screw rotation number of 200 rpm and an ejection rate of a kneaded mixture of 15 kg/hour, to obtain a thermoplastic resin composition as pellets. The contents of individual resins in the obtained thermoplastic resin compositions are shown in Tables 4 and 5. Note that, in Tables 4 and 5, a graft copolymer (I-A) and a vinyl cyanide polymer (I-B) in resin composition (I) are represented by "I-A-n" and "I-B-n" (n represents an integer of 1 to 16), respectively, in correspondence with resin compositions (I-n) in Tables 1 and 2. To be more specific, for example, the graft copolymer (I-A-2) and vinyl cyanide polymer (I-B-2) used in Example 2 and shown in Table 4 refer to the graft copolymer and vinyl cyanide polymer contained in the resin composition (I-2) shown in Table 1, respectively.

The distribution of a VCN unit content in a graft copolymer (A) was obtained in accordance with the method as mentioned above. As a result, it was found that two or more peaks were present. The representative value of the VCN unit content represented by peak 1 was 0.2 mass%; whereas the representative value of a VCN unit content (C) represented by peak 2 was 34.4 mass%. The mass average particle size of a rubbery polymer dispersed in a thermoplastic resin composition was obtained in accordance with the above method (a staining agent: osmium tetraoxide). As a result, the mass average particle size was 0.20 µm.

The composition ratio of the monomers in the graft copolymer (A) was analyzed by a Fourier transform infrared spectrophotometer (FT-IR) (serial number: FT/IR-7000, manufactured by JASCO Corporation). As a result, an acrylonitrile unit represented 15.2 mass%, a styrene unit represented 47.9 mass%, and a butadiene unit represented 36.9 mass%. The content (E) of the vinyl cyanide monomer unit in all monomer units except the rubbery polymer was 24.1 mass% and the graft rate thereof was 171%. In the meantime, the content (D) of the acrylonitrile unit in all monomer units of a vinyl cyanide polymer was 37.5 mass%. The reduced specific viscosity (ηsp/c) thereof was 0.50 dUg. These results, and individual evaluation results are shown in Table 6.

### (Examples 2 to 14, Comparative Examples 1 to 6)

Pellets of thermoplastic resin compositions were obtained in the same manner as in Example 1 except that the compositions were changed as shown in Tables 4 and 5 and individual evaluations were performed. The results are shown in Tables 6 and 7. As a result, the thermoplastic resin compositions of Examples 1 to 14 were excellent in impact resistance as well as in transparency and abrasion resistance. In contrast, in Comparative Example 1, only peak 2 emerged. Since the distribution of a VCN unit content is outside the range of the present invention, transparency was insufficient. In Comparative Example 2, only peak 1 emerged. Since the distribution of a VCN unit content is outside the range of the present invention, abrasion resistance was insufficient. In Comparative Example 3, since the difference between the representative value of a VCN unit content represented by the first peak in the above distribution and the representative value of a VCN unit content represented by the second peak is outside the range of the present invention, impact resistance and abrasion resistance were insufficient. In Comparative Example 4, since the representative value of a VCN unit content (C) represented by peak 2 is outside the range of the present invention, transparency and abrasion resistance were insufficient. In Comparative Example 5, since the content of a graft copolymer (A) is outside the range of the present invention, abrasion resistance was insufficient. In Comparative Example 6, since the content of a graft copolymer (A) is outside the range of the present invention, impact resistance was insufficient.

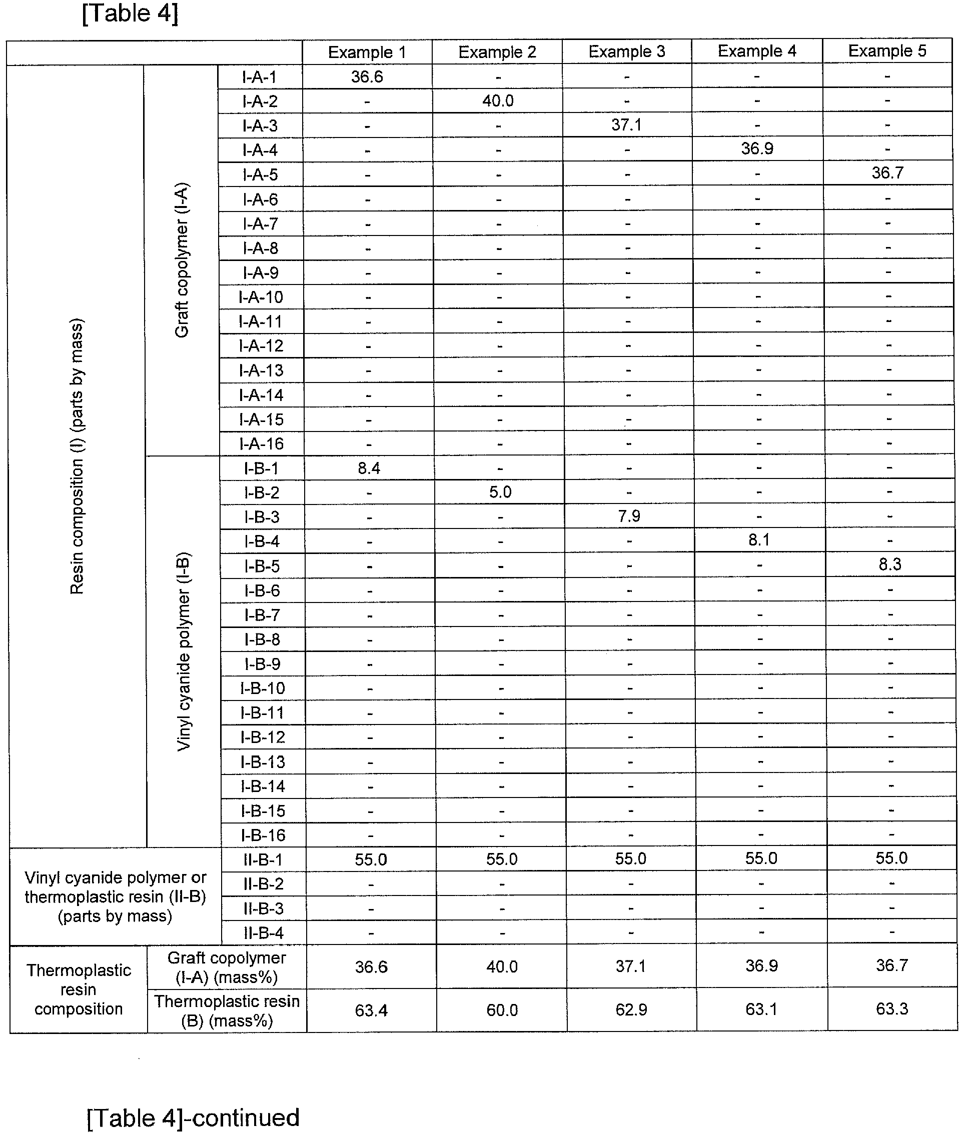

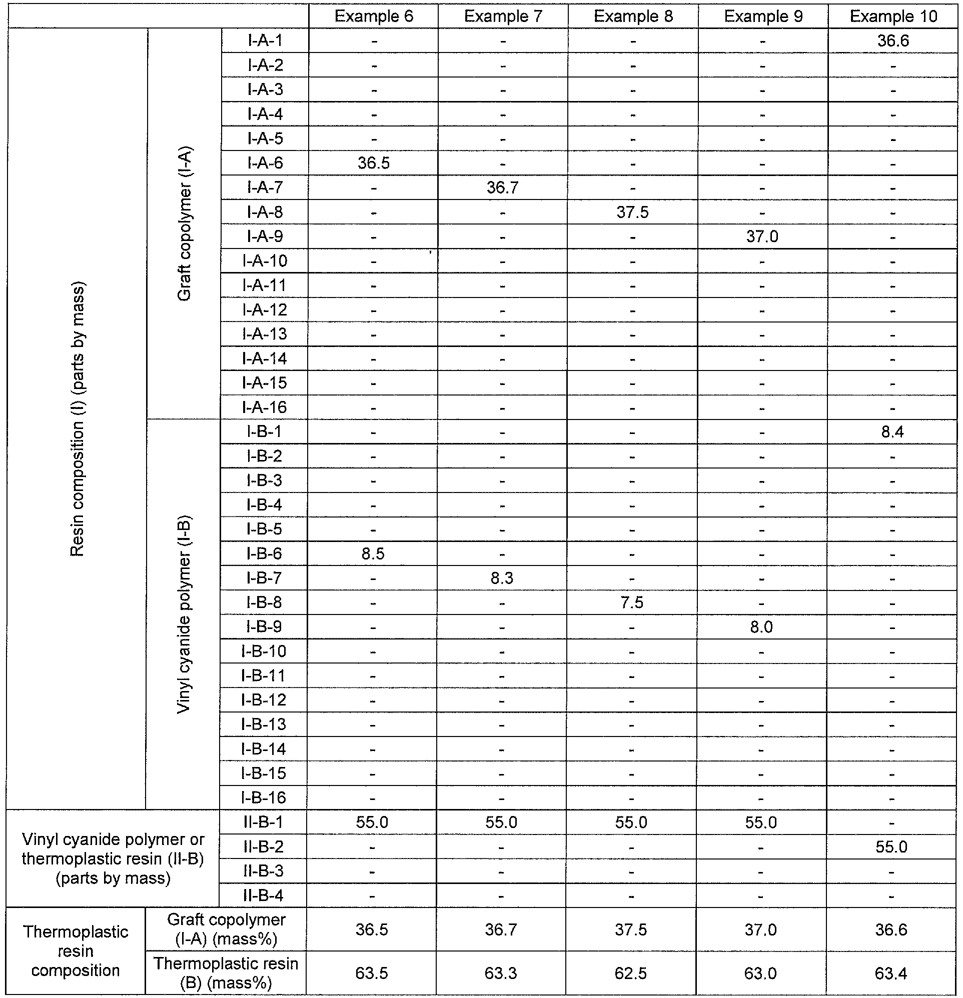

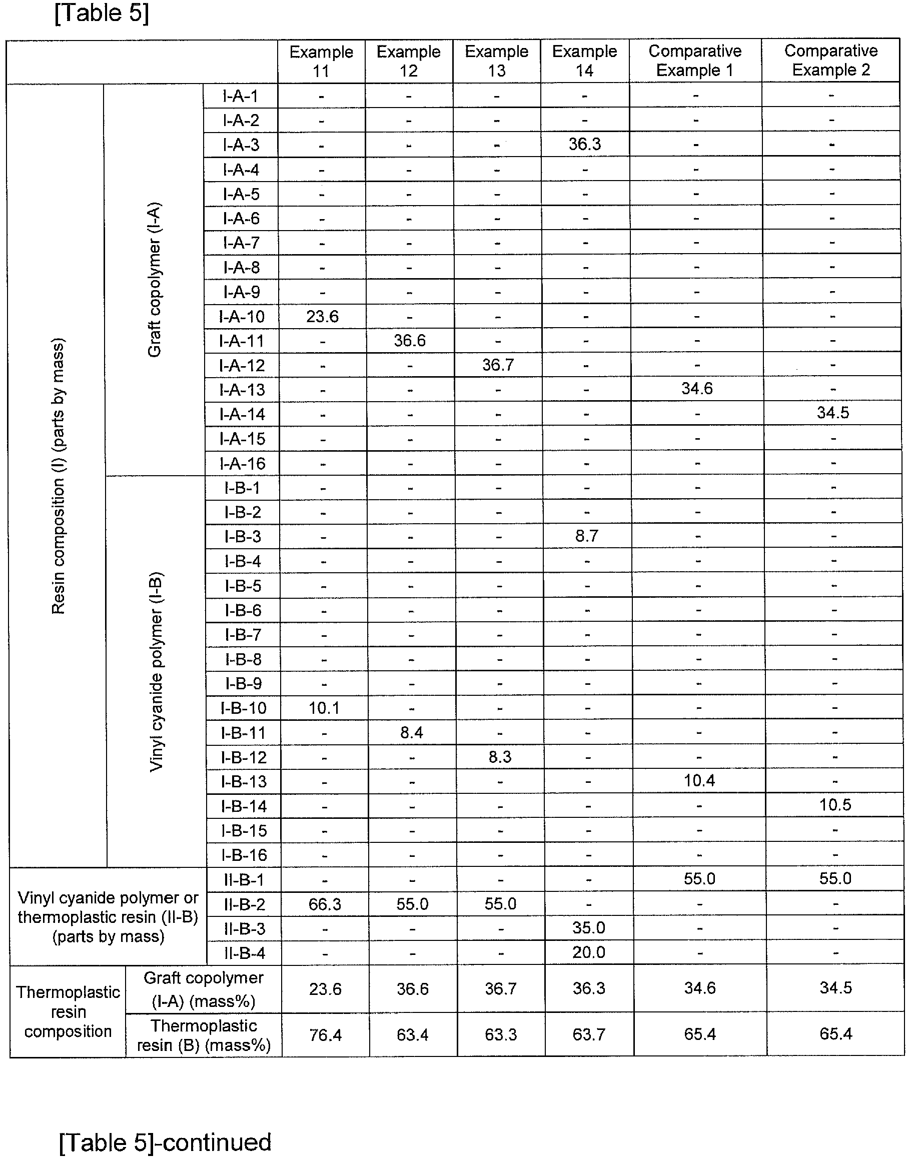

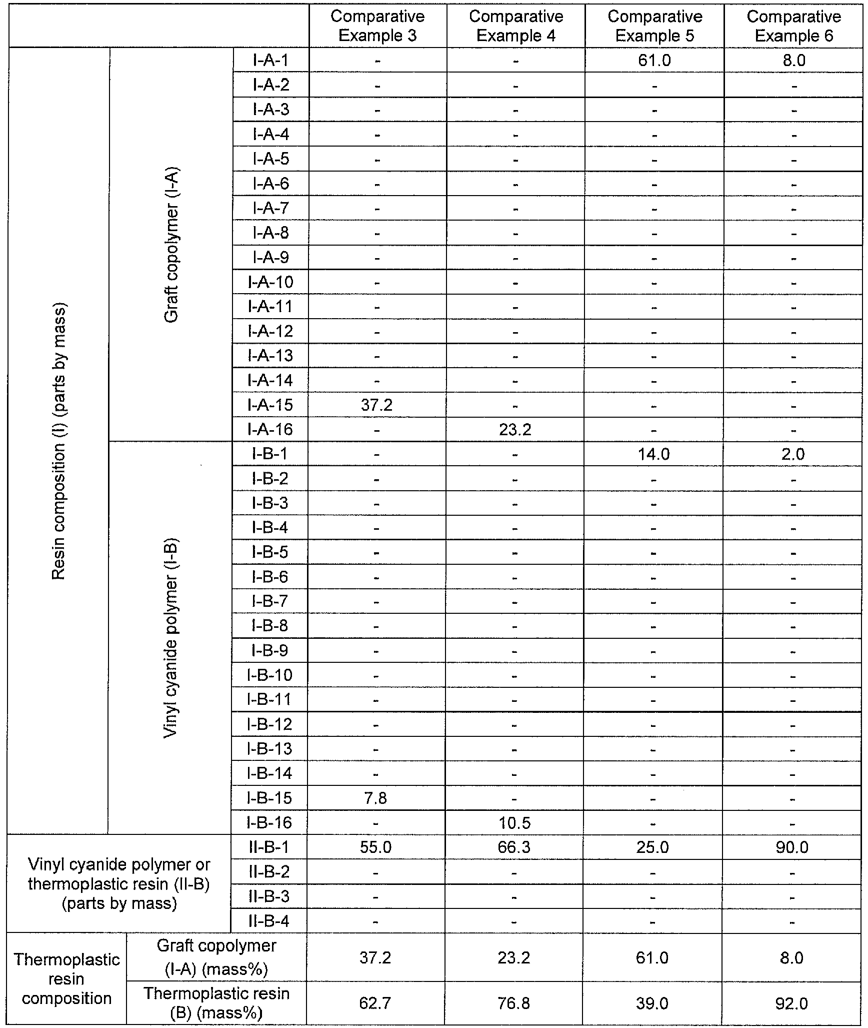

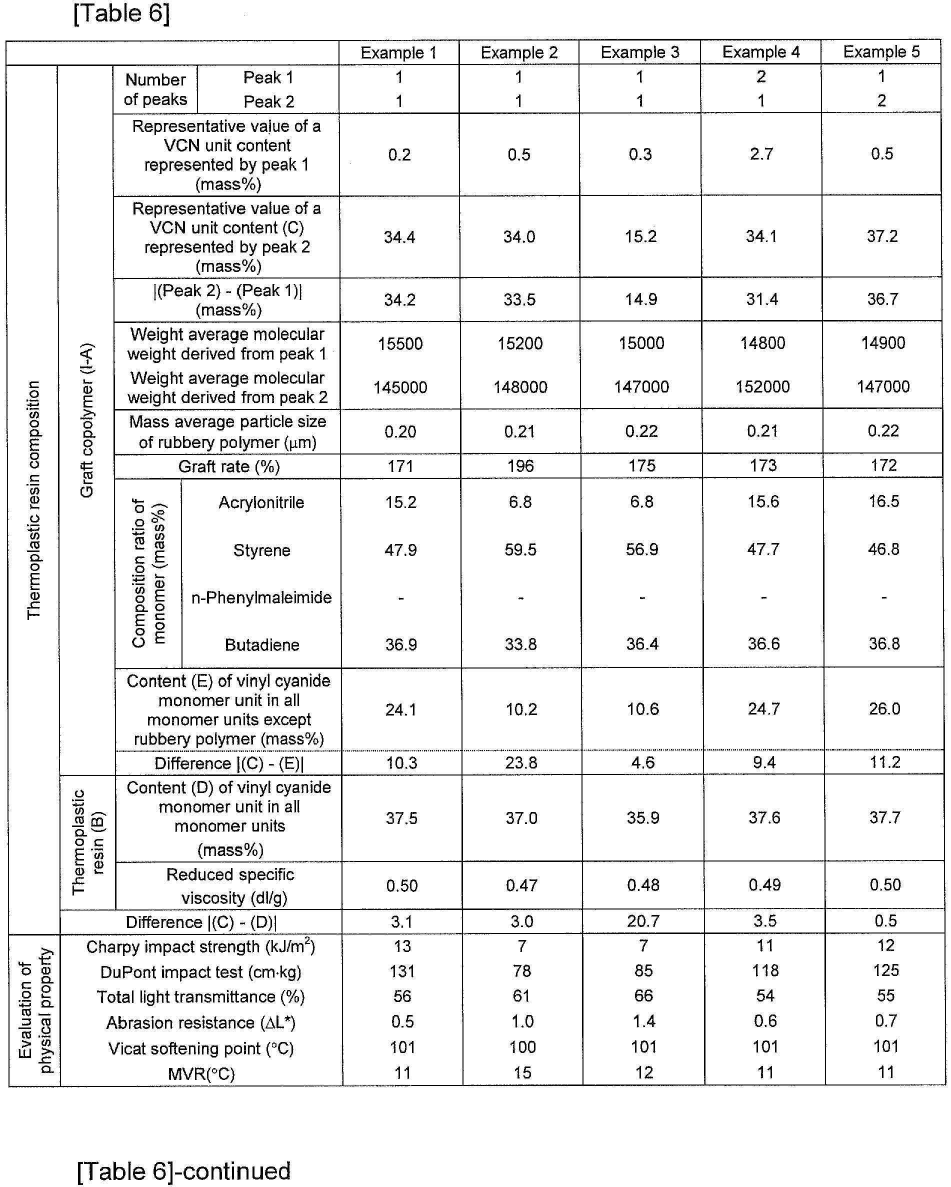

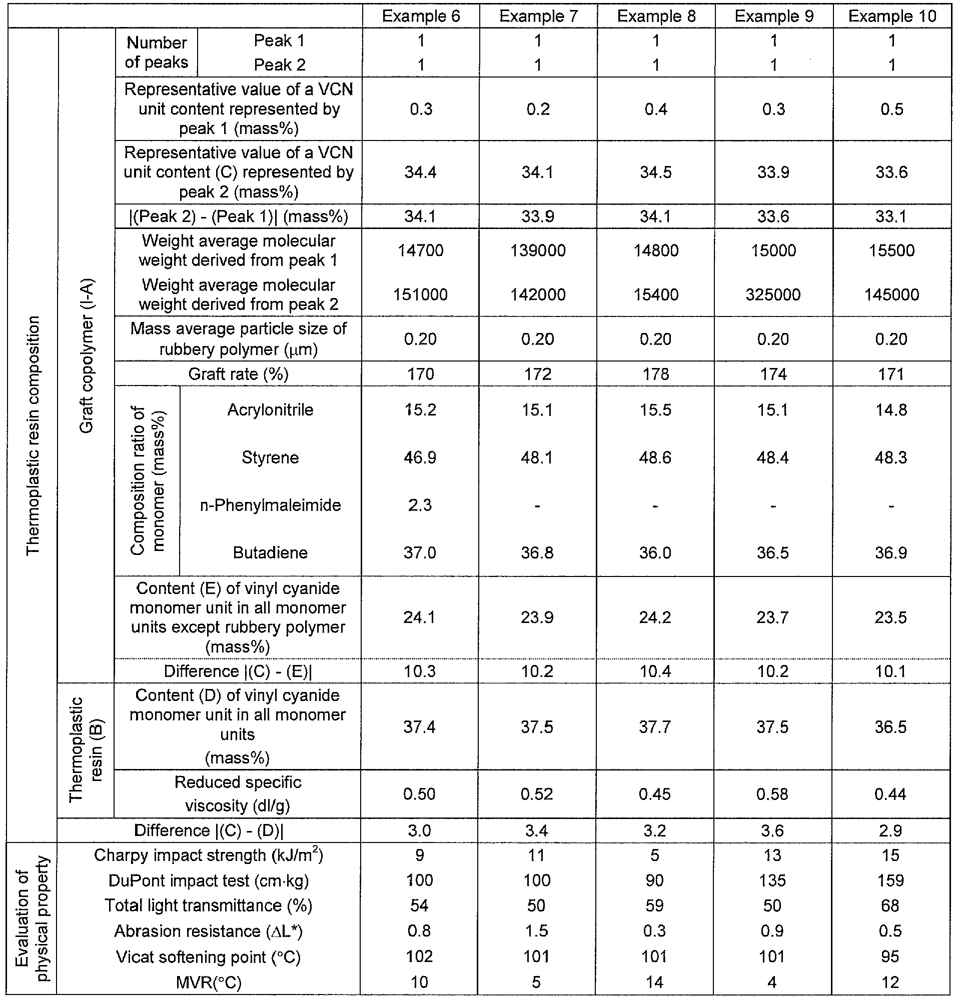

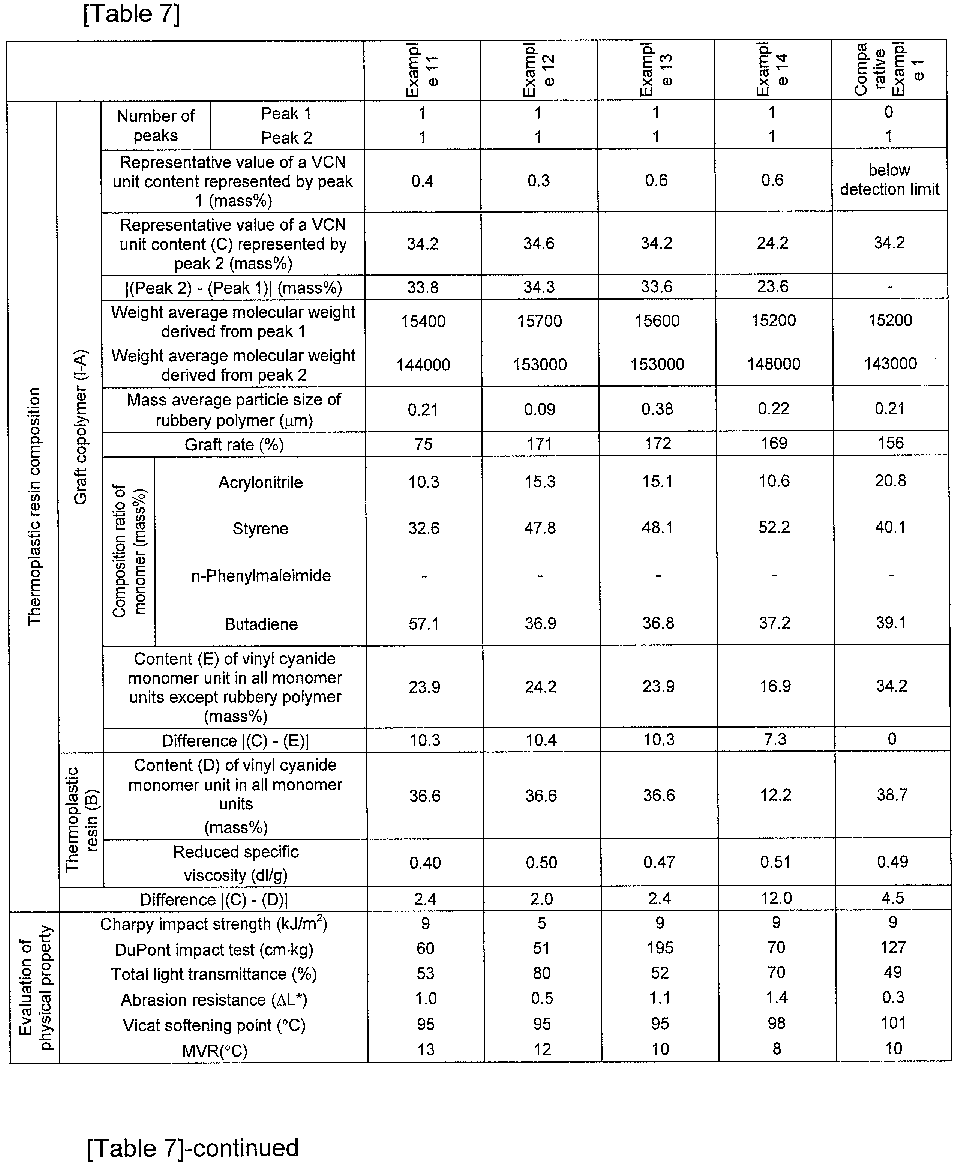

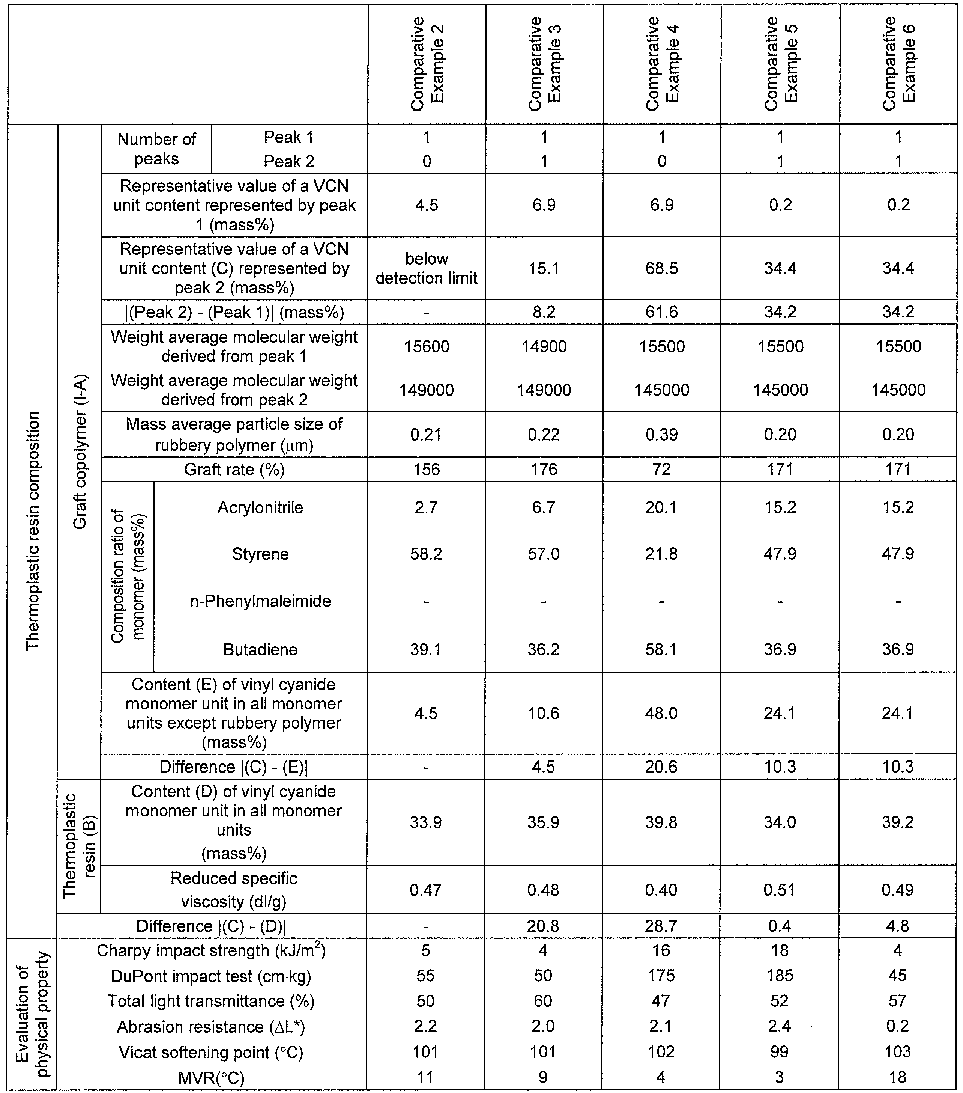

The present application is based on Japanese Patent Application No. 2013-109113 filed on May 23, 2013 and Japanese Patent Application No. 2013-267161 filed on December 25, 2013, the contents of which are incorporated by reference.

### Industrial Applicability

Use of the thermoplastic resin composition of the present invention makes it possible to provide a molded article excellent in impact resistance, transparency (appearance) and abrasion resistance without paint. Accordingly, the thermoplastic resin composition of the present invention can be used in cases of high-quality home electronics, game machines, cameras and mobile phones; and in materials for decoration frames of TV sets and automobile interior members. Examples of the home electronics may include TV sets, telephones, printers, computers, vacuum cleaners and speakers. Examples of the automobile interior members may include a center cluster, a switchboard and a pillar. The thermoplastic resin composition of the present invention has applicability in these industrial fields.

## Claims

1. A thermoplastic resin composition comprising a graft copolymer (A) and a thermoplastic resin (B), wherein
the thermoplastic resin (B) comprises a polymer having a vinyl cyanide monomer unit,
a content of the graft copolymer (A) is 10 to 60 mass% and a content of the thermoplastic resin (B) is 90 to 40 mass% based on a total amount of the graft copolymer (A) and the thermoplastic resin (B),
the graft copolymer (A) has a main-chain polymer formed of a rubbery polymer and a graft chain grafted to the main-chain polymer through polymerization,
the graft chain has a vinyl cyanide monomer unit and at least one monomer unit copolymerizable with the vinyl cyanide monomer,
distribution of the content of the vinyl cyanide monomer unit in components derived from the graft chain in the graft copolymer (A) has two or more peaks,
of the two or more peaks, at least one peak is a first peak having a peak top within a content range from 0 mass% or more to less than 10 mass%; and another at least one peak is a second peak having a peak top within a content range from 10 mass% or more to less than 55 mass%, and
difference between a representative value of the content represented by the first peak and a representative value of the content represented by the second peak is 10 mass% or more.

2. The thermoplastic resin composition according to Claim 1, wherein the rubbery polymer in the graft copolymer (A) has a mass average particle size of 0.10 to 0.80 µm.

3. The thermoplastic resin composition according to Claim 1 or 2, wherein the graft copolymer (A) has a graft rate of 80% or more and less than 240%.

4. The thermoplastic resin composition according to any one of Claims 1 to 3, wherein a component derived from the first peak in the graft copolymer (A) has a weight average molecular weight of more than 0 and less than 30,000; and a component derived from the second peak has a weight average molecular weight of 30,000 or more and less than 300,000.

5. The thermoplastic resin composition according to any one of Claims 1 to 4, wherein the rubbery polymer in the graft copolymer (A) has a mass average particle size of 0.10 µm or more and less than 0.35 µm.

6. A molded article comprising the thermoplastic resin composition according to any one of Claims 1 to 5.

7. The molded article according to Claim 6, wherein the molded article is a case.
